# EUROPEAN PATENT APPLICATION

(11) **EP 4 570 109 A1**
(43) Date of publication of application: **18.06.2025**
(21) Application number: 24206570.4
(22) Date of filing: 15.10.2024
(51) Int. Cl.: A43B 5/06, A43B 13/12, A43B 13/14, A43B 13/16, B29D 35/12, A43B 3/00

(54) **SOLE PLATE FOR AN ARTICLE OF FOOTWEAR**

(30) Priority: 15.12.2023 DE 102023135410
(71) Applicant: adidas AG, 91074 Herzogenaurach (DE)
(72) Inventor: LEHNER, Korbinian, 91074 Herzogenaurach (DE); BARTL, Jochen, 91074 Herzogenaurach (DE); BRUNS, Falk, 91074 Herzogenaurach (DE); TRUAX, Sam,, 91074 Herzogenaurach (DE); REDI, Herisson, 91074 Herzogenaurach (DE); ROHART, Florence, 91074 Herzogenaurach (DE)
(74) Representative: Bardehle Pagenberg Partnerschaft mbB Patentanwälte Rechtsanwälte

(57) **Abstract**

The present disclosure relates to a sole plate (110a, 110b) for an article of footwear, in particular for a sports shoe (100a, 100b) such as a running shoe, the sole plate (110a, 110b) comprising: a first portion (115a, 115b) comprising a first material (115c); and a second portion (116a, 116b) comprising a second material (116c); wherein the second material (116c) has a greater stiffness than the first material (115c); and wherein, when the sole plate (110a, 110b) is for a right shoe (100a), the first portion (115a) is arranged on a medial side (121a) of the sole plate (110a) and the second portion (116a) is arranged on a lateral side (120a) of the sole plate (110a), and / or wherein, when the sole plate (110a, 110b) is for a left shoe (100b), the first portion (115b) is arranged is arranged on a lateral side (120b) of the sole plate (110b) and the second portion (116b) is arranged on a medial side (121b) of the sole plate (110b), wherein the sole plate (110a, 110b) comprises one or more first apertures (125a, 125b).

## Description

### 1. Technical field

The present invention relates to a sole plate for an article of footwear, in particular for a sports shoe such as a running shoe. The sole plate comprises a first portion comprising a first material and a second portion comprising a second material, wherein the second material has a greater stiffness than the first material.

The present invention also relates to a method for manufacturing one or more sole plates for one or more articles of footwear, a sole manufactured by said method, an article of footwear in particular a sports shoe, an apparatus for manufacturing one or more sole plates, and a pair of shoes comprising a right shoe and a left shoe.

### 2. Prior art

Articles of footwear and sole plates for such articles are generally known and have various purposes and use cases. For instance, they may be designed to provide benefits for sport applications, for daily work, for leisure time or the like. Particularly in sport applications, sole plates for shoes have the potential to provide beneficial performance characteristics such that the overall performance of the wearer during an athletic activity can be increased.

An article of footwear is commonly described as the combination of an upper and a sole. Typically, the upper covers regions such as the instep, the toe, the medial side, the lateral side, and the heel of a wearer's foot and provides an opening to allow the wearer to step inside the footwear. The sole is connected to the upper such that the sole's top side faces an underfoot portion of the upper, and its bottom side touches the ground during ordinary use of the shoe.

In articles of footwear, the sole typically includes a midsole and an outsole. The midsole is usually made of a foam material or a resiliently deformable foam material. The midsole is typically interposed between the insole and the outsole and may provide for sufficient cushioning and energy return to the wearer. The outsole may provide for ground contact and is often made of a durable and wear-resistance material. In some cases, an outsole is provided with means to improve traction to the ground. For instance, outsole may be provided with one or more cleats, studs, spikes, or the like. Spikes may be important for running shoes that are used for track and field events.

Particularly in relation to running shoes for track events, such articles of footwear are becoming more and more important and have specific requirements to facilitate that the wearer can perform his or her athletic activities. Exemplary requirements that are of importance to such an article of footwear is that the shoe should improve running performance. This may be particularly of importance when an athlete is running on curved tracks, which is often the case in track and field events.

Exemplarily, the following prior art documents may be mentioned in the context of the present disclosure.

Prior art document US 11 412 812 B2 relates to a complementary pair of sole plates for use with a left article of footwear and a right article of footwear of a pair of shoes. The complementary pair of sole plates comprises a first plate for one article of footwear of the pair of shoes and a second plate for another article of footwear of the pair of shoes. The first plate includes a first groove that extends through an entire thickness of the first plate that divides a forefoot portion of the first plate into a first continuous lateral plate portion and a first continuous medial plate portion, wherein the first groove is the only groove extending completely through the first plate. The second plate includes a second groove extending through an entire thickness of the second plate and a third groove extending through the entire thickness of the second plate, wherein the second groove and the third groove are the only grooves extending through the entire thickness of the second plate. The second groove and the third groove divide a forefoot portion of the second plate into a second continuous lateral plate portion, a first continuous intermediate plate portion, and a second continuous medial plate portion, and wherein the complementary pair of sole plates have an asymmetric configuration with respect to one another.

Prior art document US 6 954 998 B1 relates to an article of footwear including a sole with a chassis constructed to provide, in a pre-selected manner, comfort, flexibility, support, and power transfer by varying the configuration, thickness, and/or material of the chassis in various areas of the chassis, thereby providing for varying degrees of stiffness in the footwear.

Prior art document US 9 713 357 B2 relates to an asymmetric pair of shoes to optimize performance during a sporting activity, the asymmetric pair of shoes, are including: a first shoe having a first upper and a first sole attached to the first upper, wherein the first upper comprises a first support feature configured to provide increased support to at least one portion of the first upper during performance of a first predetermined action of a first foot of a wearer, and the first sole comprises a first traction feature configured to provide increased traction to at least one portion of the first sole during performance of the first predetermined action of the first foot; and a second shoe having a second upper and a second sole attached to the second upper, wherein the first support feature and first traction feature are not present at corresponding mirror-image locations of the second shoe.

Furthermore, the following prior art documents may be mentioned for background knowledge: CN 102 631 049 A and WO 2005 090 062 A1.

While the above documents claimed improvement over the known prior art thus far, the proposed solutions of said documents still have some deficiencies when it comes to providing the above noted requirements to an article of footwear.

Against this background, it is an object of the present invention to provide an improved sole plate for an article of footwear. The wearer of the article of footwear should be able to perform athletic activities in an improved manner, particularly when the sole plate is used for running in track and field events. It is a further object of the present invention to provide a method and a respective apparatus for manufacturing a sole plate.

### 3. Summary of the invention

The above-mentioned objects are at least partially achieved by the subject-matter of the independent claims. Preferred embodiments are subject of the dependent claims, and other suitable aspects of the present invention are described through the overall disclosure of the present application. It is noted that the headlines in the present disclosure are provided solely for the purpose to assist in keeping an overview during reading. The headlines do not mean that features of the respective embodiments cannot be combined.

### Sole plate for an article of footwear

In one aspect, the objects of the present disclosure are at least partially solved by a sole plate for an article of footwear, in particular for a sports shoe such as a running shoe, the sole plate comprising: a first portion comprising a first material; and a second portion comprising a second material; wherein the second material has a greater stiffness than the first material; and wherein, when the sole plate is for a right shoe, the first portion is arranged on a medial side of the sole plate and the second portion is arranged on a lateral side of the sole plate, and / or wherein, when the sole plate is for a left shoe, the first portion is arranged is arranged on a lateral side of the sole plate and the second portion is arranged on a medial side of the sole plate, wherein the sole plate comprises one or more first apertures.

In this manner, the sole plate for an article of footwear facilitates improved support to a wearer, in particular when it is used for a shoe during running such as running on an athletics track. In particular, an optimized behavior for track and field runners can be achieved, as they typically run a curve (which may be understood as a bend) on an athletics track. Alternatively or additionally an optimized behavior may be achieved for high-jump or any other sports discipline in track and field sport events. It is appreciated that when the sole plate may be a sole plate for a right shoe and / or a sole plate for a left shoe, the arrangement of the first portion of the sole plate and the second portion of the sole plate is adjusted accordingly. Thereby, different sole plates for a left shoe and a right shoe may be provided, which is particularly useful when running a curve. The left shoe and the right shoe may thereby differ in material properties, which is useful for sufficient support and / or cushioning. In addition, the left shoe and the right shoe may thereby differ in geometry. For instance, they may be asymmetrical. In this manner, the sole plate provides for particularly tailored shoes for a left foot and a right foot of the wearer.

As mentioned above, the sole plate may be particularly useful for track and field runners. Without wishing to be bound by theory, such track and field runners typically run in a counterclockwise direction of the track. This may apply for instance during a competition and / or during usual training or the like. Thereby, the runners tend to lean inwards on their left side. Thus, the left shoe and the right shoe are exposed to a different load condition compared to running on a substantially straight line. In addition, the load distribution within of shoe alone and, thereby, of one sole plate alone may differ. This may need adjustments to the sole plate in order to account for these differences. According to the sole plate proposed in here, these needs can be addressed by providing a stiffer material on lateral side of the sole plate when used for a right shoe, and a stiffer material on the medial side of the sole plate when used for a left shoe. Further, a less stiff, e.g., a softer material is provided on the medial side of the sole plate when used for a right shoe and a less stiff, e.g., a softer material is provided on the lateral side of the sole plate when used for a left shoe. This may have the advantage that a softer and / or less stiff material is provided on the side of the sole plate which may come into contact with the ground first.

The one or more first apertures have the advantage of contributing to an improved performance of the sole plate. For instance, the behavior under a load impact may thereby be improved. That may be the case, because expansion of the first material and / or the second material into said one or more first apertures may be facilitated. In one example, the one or more first apertures may allow the first material and / or the second material to expand substantially horizontally. However, also any other direction of expansion and / or combinations of other directions are encompassed in the present disclosure. This may improve the cushioning effect, which is appreciated by the wearer. In particular, the cushioning effect may be improved without substantially impacting stability and durability of the sole plate, due to a tailored design of the one or more first apertures. Moreover, the one or more first apertures have the further advantage of reducing the weight of the sole plate, thereby reducing the overall weight of a shoe comprising said sole plate. A lightweight shoe is particularly advantageous when it is used for an athletic activity like running. The one or more first apertures may also allow for a different layer of a shoe to expand into said one or more first apertures. For instance, an insole may at least partially expand into said one or more first apertures. Alternatively or additionally, it is conceivable that a midsole foam material may partially expand into said one or more first apertures. As shoes for track and field events are typically rather stiff, such an expansion is appreciated by the wearer and may contribute to reduced fatigue.

Another advantage is that the one or more first apertures may reduce a stiffness of portions of the sole plate where the one or more first apertures are located. For example, the one or more first apertures may provide for a lateral flexibility while keeping stiffness in the length wise direction of the sole plate. This is appreciated in particular during an athletic activity.

The first portion of the sole plate and / or the second portion of the sole plate may have any dimension. In particular, they may have any dimension along the heel to toe axis and / or the medial to lateral axis. Further, they may have any dimension along the vertical axis, i.e., in the direction of the depth of the sole plate. It is noted that such axes mentioned in here are commonly known to the skilled person. The first portion and / or the second portion may extend strategically to certain portions of the sole plate to suit specific needs of the athletic activity.

The "medial side" of the sole plate may cover about half of the part of the sole plate that is arranged medially as seen from a heel to toe midline of the sole plate. Said heel to toe midline of the sole plate may be passing along the heel to toe axis of the sole plate. The "lateral side" of the sole plate may cover about half of the part of the sole plate that is arranged laterally as seen from a heel to toe midline. Said heel to toe midline of the sole plate may be passing along the heel to toe axis of the sole plate. As understood by the skilled person, the "half of the part" of the sole plate may in some cases slightly vary, as the sole plate may be asymmetric. This variation is expressed by the term about.

An "aperture" as used in the present disclosure may essentially be understood as an opening or the like. The one or more first apertures of the sole plate may be implemented in various ways, including but not limited to recesses, grooves, slots, slits, cut-outs or the like as described elsewhere herein in greater detail. The one or more first apertures of the sole plate may be through-holes. This may further contribute to an enhanced expansion effect of the sole plate in general and / or of the first material and / or the second material that is comprised by the first portion and / or the second portion, respectively. The aperture may in some examples be understood as an opening, whose free flow passage may be adjustable. This could have further benefits regarding an adapted cushioning.

The one or more first apertures of the sole plate may have a closed boundary. The closed boundary may be understood such that the one or more first apertures of the sole plate are enclosed by a periphery of the sole plate. In other words, the one or more first apertures of the sole plate may be within the sole plate. The one or more first apertures of the sole plate may be shaped such that light could pass through it.

It is noted that the term "first" of the expression "one or more first apertures" does not limit the term "apertures" itself. In particular, this does not mean that a "first aperture" may necessarily be different than a "second aperture" and / or that a "first aperture" is more limiting than an "aperture" alone. The term "first" is merely used to name the aperture appropriately. In particular, the same features and advantages described with reference to the "one or more first apertures" may be equally applicable to the "one or more second apertures". This is also described elsewhere herein.

The "wearer" referred to herein may be any kind of human capable of wearing an article of footwear. The term "wearer" may be used synonymously to the terms "user", "athlete", "human being", "person", or the like.

It is understood that the described advantages of the sole plate for an article of footwear as described in the foregoing may apply also for the following preferred embodiments.

### Properties of the sole plate

In a preferred embodiment of the sole plate for an article of footwear as described herein, the second material has a stiffness compared to the first material of at least 1.1, preferably at least 1.2, more preferably at least 1.5, even more preferably at least 2.0, further more preferably at least 2.5, further more preferably at least 3.0, further more preferably at least 3.5, further more preferably at least 4.0, further more preferably at least 4.5, further more preferably at least 5.0, further more preferably at least 5.5, most preferably at least 6.0.

The different levels of stiffness of the second material in comparison to the first material as specified in this embodiment offers at least the following advantages: a stiffer material can make the sole plate more durable and resistant to damage or deformation under pressure or load. A material with high stiffness may help increase stability in the sole plate. Further, stiffer materials in the context of sole plates can enhance precision and accuracy. This may be particularly of importance when the sole plate is used for a shoe during running on an athletics track. That is, because in track and field events, a high accuracy may be helpful to reach a high level of performance. Further adding to this advantage, the stiffness may help to avoid any misalignment or displacement of second portion and / or its position can be predicted and /or maintained even under pressure or load to a greater extent. A stiffer material can make the sole plate more durable and resistant to damage or deformation under pressure or load.

Further, this embodiment has the advantage that a softer and / or smoother touch down and foot strike can be provided to the lateral side of the sole plate, when the sole plate is for a right shoe. Further, a softer and / or smoother touch down and foot strike can be provided to the medial side of the sole plate, when the sole plate is for a left shoe.

It may generally be noted that the sole plate has the benefit that a softer and / or less stiff material is provided on the side of the sole plate which may come into contact with the ground first. The ground may be a track, such as a curve of a track in athletics tracks. It is also conceivable that the ground may be a ground on which an athlete walks or runs in preparation of a high-jump, or any other sports discipline in track and field sport events. Such a softer and / or less stiff material allows for an improved move-in transition in the landing phase of the foot. Additionally or alternatively, the softer and / or less stiff material on the lateral side of left sole plate and on the medial side of the right sole plate may enable the foot to naturally have a banking effect especially when running around a bend.

In a preferred embodiment of the sole plate for an article of footwear as described herein, the second material has a greater hardness compared to the first material.

This has the advantage that the first material can be sufficiently deformed, for instance, it may be elastically deformed, whilst the second material is at the same time less prone to deformation or the like. Thereby, the second material may provide for sufficient stability.

The second material being at the same time less prone to deformation may in particular aid in an improved running experience by providing the necessary bending stiffness. Without wishing to be bound by theory, this may be explained as follows. Said increased bending stiffness may generally help an athlete in reducing energy lost, such as energy due to movement of the athlete, e.g., kinetic energy. The sole plate may interact with the joints in the foot and ankles in the form of a lever against the forces put into the ground. In turn, this may minimize the ground contact time and may provide higher energy return especially in the forefoot of an athlete.

For such a sole plate, it is in particular advantageous if the plate is asymmetrical, as this may give increased flexibility on the side, which is closest to the inner radius of the track on which an athlete is running. It is conceivable that when the sole plate is used for a 200 m or 400 m dash race, demanding longer sprints, e.g., sprints through the curves of the track, such an asymmetric arrangement becomes even more beneficial. That is, because maximizing stiffness can still be ensured in locations of the sole plate where most needed, whilst at the same time muscle fatigue arising out of changing body position and form during the sprint can be counter-acted.

The "hardness" may be understood as the ability of a material to withstand force without deformation, scratching, penetration, and / or indentation. In other words, the hardness may be the ability of a material to substantially maintain its physical features even in the face of applied force.

In a preferred embodiment of the sole plate for an article of footwear as described herein, the first material has a shore D hardness of at most 70 shore D, preferably at most 65 shore D, most preferably at most 60 shore D, and / or wherein the second material has a shore D hardness of at least 65 shore D, preferably at least 70 shore D, most preferably at least 72 shore D.

This further contributes to the foregoing advantages set out in relation to the hardness of the second material being greater than the first material.

The shore D hardness of the first material and / or the second material should be within certain limits as proposed in this embodiment. Thereby, conflicting requirements in relation to manufacturing and functional properties can be advantageously taken into account. By way of the proposed shore D values in this preferred embodiment, an optimum balance could be struck.

In a preferred embodiment of the sole plate for an article of footwear as described herein, the second material has a greater flexural modulus compared to the first material.

This further contributes to the foregoing advantages set out in relation to the different functionalities that can be imparted to the first material and the second material of the sole plate.

The "flexural modulus" as used in the present disclosure may be understood as a bending modulus. The flexural modulus may be an intensive property that is determined as the ratio of stress to strain in flexural deformation, and / or the tendency for a material to resist bending.

In a preferred embodiment of the sole plate for an article of footwear as described herein, the first material has a flexural modulus of at most 1000 MPa, preferably at most 800 MPa, more preferably at most 600 MPa, even more preferably at most 400 MPa, further more preferably at most 300 MPa, most preferably at most 250 MPa, and/or wherein the second material has a flexural modulus of at least 800 MPa, preferably at least 900 MPa, more preferably at least 1000 MPa, even more preferably at least 1100 MPa, even more preferably at least 1200 MPa, even more preferably at least 1300 MPa, further more preferably at least 1400 MPa, most preferably at least 1500 MPa.

The flexural modulus of the first material and / or the second material should not be too high and not be too low. This ensures that conflicting requirements in relation to manufacturing and functional properties of the sole plate can be accounted for. By way of the proposed flexural modulus values in this preferred embodiment, it is believed that an optimum balance could be found.

### Apertures of the sole plate

In a preferred embodiment of the sole plate for an article of footwear as described herein, the one or more first apertures have an elongated shape, preferably a shape of one of a slit, a groove, a cut, and a vent.

This has the advantage that the stability of the sole plate can be substantially maintained whilst the material (comprising the first material and the second material) of the sole plate is configured to expand at least partially into the one or more apertures.

The shapes specified in this preferred embodiment have the further advantages that ventilation, cooling, aesthetics, functionality, and / or the like may be improved. Exemplarily, the foot of the wearer may be subject to somewhat greater ventilation which could reduce an accumulation of moisture. This may also improve longevity of the sole plate and / or the article of footwear in general. In addition, the shapes have the advantage that essentially no disturbing objects from the environment, such as pebbles or the like, can accumulate therein and / or can protrude therethrough. Otherwise, this could impair the wearer's performance, and could irritate the wearer. This may be in particular of importance when no outsole is provided and / or when the sole plate is used as an outsole.

The one or more first apertures may additionally or alternatively have a segmented shape. For instance, they may have a discontinued shaped. Preferably this discontinued shape may be oriented along the heel to toe axis of the sole plate. It is to be noted that the one or more first apertures being along the heel to toe axis of the sole plate provide lateral flexibility while keeping stiffness in the length wise direction. A segmented shape or a discontinued shape can possess several advantages. For instance, the one or more first apertures may be more flexible and may be able to bend or conform to different shapes and / or load conditions that may occur during running. This is because the segments may be able to move independently from one another at least to a certain extent. Moreover, a segmented or discontinued shape allow for greater customization, as individual segments of the one or more apertures can be designed and modified without affecting the entire aperture. Different segments may have the advantage to serve different purposes. For instance, different segments may have a wider or narrower extension in the transverse direction compared to other segments. Further, in the unlikely event that damage may occur to a segmented or discontinued aperture, it may be often confined to a single segment thereof. This may mean that the entire aperture does not loosen its effectiveness. Thus, reliability is enhanced. Moreover, a segmented or discontinued shape can adjust better to any further functional elements provided in proximity to the one or more apertures. Suitable examples of such further functional elements may be receptacles for spikes. This may be of advantage in case a limited space is available. Further, the apertures can thereby be designed so as to fit in the sole plate closely or accurately. Further, segmented or discontinued shapes may facilitate expansion and contraction.

A segmented shape or a discontinued shape may be understood as a shape of the aperture in which different segments may be recognizable. Such segments may define a sub-aperture. In one example, the segments may be connected by a material of the sole plate. In some examples, the sub-apertures are not connected and, therefore, regarded as discontinued. Discontinued may mean that the sub-apertures are separate and distinct from one another. Nevertheless, the overall circumference of these sub-apertures may be within the material of the sole plate. The overall circumference of these sub-apertures may be oriented in one direction. In this manner, the sub-apertures, although being separate and distinct from one another, may form one group.

The term "elongated" (e.g., as used when a shape of an aperture is elongated) means that there may be a dimension along one axis of the aperture, which may be larger than one and preferably than both dimensions along the remaining axes, the remaining axes being substantially perpendicular to said one axis. It is understood that when dimensions are described herein, manufacturing tolerances usually have to be taken into consideration. Thus, the dimensions described herein may vary slightly. The term elongated as used to describe a shape may additionally or alternatively mean that said shape is slender or the like.

As described elsewhere herein in greater detail, regardless of the shape of the one or more first apertures, they may still have a closed boundary, i.e., they are enclosed by a periphery of the sole plate.

In a preferred embodiment of the sole plate for an article of footwear as described herein, the one or more first apertures define through holes.

This further contributes to the foregoing advantages of the apertures. Through holes have the potential to impart certain functional properties to the sole plate to a significant extent. For instance, a distribution of the pressure load may be influenced thereby. This may be appreciated by an athlete performing his or her athletic activity. In addition, a part of a shoe behind said aperture may be visible from the bottom of the sole plate and / or of the article of footwear. This facilitates that its state, integrity, or the like may be assessed by personnel in an easy fashion. To illustrate this visibility in a non-limiting example, the part of the shoe behind said aperture could be at least partially touched or the like by a user. Such touching may be possible, for instance, when a respective shoe comprising the sole plate is not worn.

Further, through holes may facilitate the manufacturing of the article of footwear. In addition, the space provided for the material of the sole plate to expand may be increased. In addition, the one or more first apertures defining through holes have the further advantage of reducing the weight of the sole plate. In turn, this bears the potential to reduce the overall weight of a shoe comprising said sole plate. A lightweight shoe is particularly advantageous when it is used for an athletic activity like running.

The term through hole may mean that the hole runs completely through the material of an object.

In a preferred embodiment of the sole plate for an article of footwear as described herein, the one or more first apertures extend in a longitudinal direction of the sole plate and in a transverse direction of the sole plate, wherein the extension in the longitudinal direction is preferably larger compared to the extension in the transverse direction.

The one or more first apertures extending in the longitudinal direction by a larger amount compared to the transverse direction may have the advantage that the firmness and / or the stability of the sole plate can be substantially maintained. Additionally, or alternative, the firmness and / or the stability of the sole plate is not substantially impaired. Still, the expansion of the material (comprising the first material and the second material) of sole plate into the one or more apertures is facilitated.

The longitudinal direction may be substantially parallel and / or the same as the heel to toe axis of the sole plate. The transverse may be substantially parallel and / or the same as the medial to lateral axis of the sole plate.

In a preferred embodiment of the sole plate for an article of footwear as described herein, the one or more first apertures are arranged in the first portion of the sole plate.

This has the advantage that the first portion of the sole plate is provided with apertures, so that expansion of the first material is facilitated. This is beneficial, as the first material is less stiff compared to the second material. Accordingly, the first material is more likely to be deformed. Thus, an improved cushioning may be provided to the wearer.

As described elsewhere herein, the first portion of the sole plate may be arranged on the lateral side of the sole plate when the sole plate is for a left shoe. Further, the first portion of the sole plate may be arranged on the medial side of the sole plate when the sole plate is for a right shoe.

### Second apertures

In a preferred embodiment of the sole plate for an article of footwear as described herein, the sole plate comprises one or more second apertures arranged in the second portion of the sole plate.

This further contributes to the foregoing advantages of the first apertures. In particular, the provision of one or more second apertures arranged in the second portion could provide enhanced functionality, improved performance capabilities, and a greater versatility. For example, the one or more second apertures could be used for another, complementary function as compared to the one or more first apertures. Further, although the second material in the second portion has a greater stiffness compared to the first material in the first portion, the second apertures may nevertheless be configured such that the second material can at least partially deform into the one or more second apertures.

As described elsewhere herein, the same features (including but not limited to the shapes, direction of expansion, or the like) and advantages described with reference to the "one or more first apertures" may equally apply to the "one or more second apertures". For brevity, repetition of these features and advantages is skipped in here.

In one example, the one or more second apertures can be spaced apart from the one or more first apertures on opposing sides of a heel to toe midline of the sole plate (said heel to toe midline may be passing along the heel to toe axis of the sole plate). However, it is noted that the arrangement of the one or more second apertures in relation to the one or more first apertures is not limited to this particular example.

In a preferred embodiment of the sole plate for an article of footwear as described herein, the number of the one or more first apertures is greater than the number of the one or more second apertures.

The configuration of having a greater number of first apertures than second apertures may have several advantages. For instance, this may provide for a more balanced functionality. A primary function for deformation of the first material in the first portion may be performed through the greater number of first apertures. Further, a secondary or complementary function may be performed via the fewer second apertures. This can achieve balance between different functions and may improve overall effectiveness. In addition, it may be ensured that more (first) apertures are provided in the first portion where they were found to be particularly helpful in improving cushioning and / or performance of a runner. Moreover, the number of apertures may reflect the priority of functions. For instance, the first apertures may be made for a more frequently used function. Thereby, having more of these first apertures will ensure efficient performance of that function. The difference in the number of apertures can also help to provide a more asymmetric functionality and, thereby, improve the sole plate's performance. Further, by limiting the number of second apertures, it may be possible to reduce unwanted or less desirable effects that may occur if both, i.e., the first apertures and the second apertures were equally numerous. Further, the first material (e.g., the less stiff material) can thereby deform to a greater extent compared to the second material (e.g., the stiffer material).

In a preferred embodiment of the sole plate for an article of footwear as described herein, the number of the one or more first apertures is different than the number of the one or more second apertures. As understood, this may contribute to the advantages mentioned in the foregoing embodiment.

### Spikes

In a preferred embodiment of the sole plate for an article of footwear as described herein, one or more spikes are arranged on the sole plate, preferably on a forefoot portion of the sole plate. Preferably, the sole plate comprises one or more receptacles, wherein the one or more receptacles are arranged on the sole plate, preferably on a forefoot portion of the sole plate, wherein the one or more receptacles are configured to receive the one or more spikes.

The one or more spikes may face a ground during ordinary use of the sole plate. The one or more spikes can provide several advantages. For instance, they may improve traction. This may help the wearer to grip the ground more efficiently. This may be the case on any kind of ground, in particular on soft grounds. Such grounds may prevail on athletics tracks. Further, spikes can help the wearer to accelerate, decelerate, and change directions more quickly and securely. This can enhance performance, which may be in particular of importance when the sole is used for a shoe during running such as running on an athletics track. This may also enhance performance of an athlete performing a high-jump or any other sports discipline in track and field sport events, particularly those that involve running or accelerating in a curved track. That is, because a high level of performance may be required for track and field events. Spikes can also provide better stability to the foot, making it easier to keep balance. In activities like running, spikes on the forefoot can help the wearer to push off the ground more effectively, facilitating better energy transfer and potentially optimizing performance. Moreover, spikes on the forefoot can encourage the wearer to land more on their forefoot rather than their heels. This can reduce the risk of injuries and improve running efficiency.

As described elsewhere herein, the sole plate may comprise one or more receptacles that are arranged on the sole plate, preferably on a forefoot portion of the sole plate. The one or more receptacles are configured to receive the one or more spikes. Thereby, the one or more receptacles are configured to engage with the one or more spikes. This may have the advantage of providing a firm fit to the one or more spikes.

In a preferred embodiment of the sole plate for an article of footwear as described herein, the one or more first apertures and / or the one or more second apertures may be arranged between two or more of spikes, and / or wherein the one or more spikes may be arranged between two or more first apertures and / or two or more second apertures.

This may improve traction to the ground due to the arrangement of the one or more spikes in relation to the one or more first and / or second apertures. Further, arranging the apertures in proximity to the spikes may improve expansion of the first material and / or the second material into the respective apertures. This may be due to the relatively high pressure acting on the spikes during running, which can thus be compensated to a greater extent.

### Dimensions and general features

In a preferred embodiment of the sole plate for an article of footwear as described herein, the one or more first apertures and / or the one or more second apertures have a length, preferably in a longitudinal direction of the sole plate, of at least 1 cm, preferably at least 2 cm, more preferably at least 3 cm, even more preferably at least 4 cm, further more preferably at least 5 cm, further more preferably at least 6 cm, further more preferably at least 7 cm, further more preferably at least 8 cm, further more preferably at least 9 cm, further more preferably at least 10 cm, further more preferably at least 11 cm, further more preferably at least 12 cm, further more preferably at least 13 cm, further more preferably at least 14 cm, most preferably of at least 15 cm, and / or the one or more first apertures and / or the one or more second apertures have a length, preferably in a longitudinal direction of the sole plate, of at most 25 cm, preferably at most 23 cm, more preferably at most 20 cm, even more preferably at most 19 cm, further more preferably at most 18 cm, further more preferably at most 17 cm, further more preferably at most 16 cm, most preferably of at most 15 cm.

With the lengths of the one or more first apertures and / or the one or more second apertures as specified in here, an optimal balance can be struck between the following conflicting requirements. On the one hand, sufficient expansion of the material (comprising the first material and the second material) of the sole plate should be provided. This may potentially reduce a pressure to the wearer and may make ground contact more comfortable to the wearer. For this, a large length would be desired. On the other hand, sufficient support and / or stability to the foot of the wearer should be provided. This may potentially reduce transition in the horizontal direction upon landing. For this, a low length would be desired.

As described elsewhere herein, the longitudinal direction of the sole plate may be substantially parallel to a heel to toe axis of the sole plate.

In a preferred embodiment of the sole plate for an article of footwear as described herein, the sole plate has a maximum thickness of at most 10 mm, preferably at most 9 mm, more preferably at most 8 mm, even more preferably at most 7 mm, even more preferably at most 6 mm, even more preferably at most 5 mm, even more preferably at most 4 mm, most preferably at most 3 mm.

This has the advantage that the sole plate may not act and / or feel like a bulky object of the article of footwear. Rather, the sole plate may be smoothly integrated to the article of footwear, which is appreciated by the wearer. Further, a lower thickness may be advantageous as material usage can thereby be reduced. This has economic and ecological advantages. In addition, this contributes to a lightweight shoe. Nonetheless, the thickness is sufficiently large so as to provide a certain stability to the foot of the wearer.

As understood, the thickness may be measured substantially along a vertical axis when the sole plate is used according to its ordinary use. For instance, the thickness may be measured from the top to bottom or from the bottom to top, as seen from the perspective of the wearer. The skilled person may generally be able to determine said thickness.

Further, the sole plate may comprise a varying thickness, which could contribute to a tapered shape of the sole plate. By varying the thickness of the sole plate, various different effects can be achieved in different portions of the sole plate. Thereby, the stiffness, hardness, flexural modulus of the sole plate may be influenced on the same sole plate in an easy fashion.

In a preferred embodiment of the sole plate for an article of footwear as described herein, the sole plate is an integrally formed piece extending from a heel region of the sole plate to a toe region of the sole plate.

This preferred embodiment may be understood in such a manner that the sole plate is an integrally formed piece. In addition, said piece is extending from a heel region of a foot of a wearer to a toe region of a foot of a wearer, when a shoe comprising the sole plate is worn by the wearer during ordinary use.

Integrally forming the sole plate, e.g., forming them as one piece, may also be known as a monolithic or integral design. This may offer several advantages. For instance, strength and durability may be provided, since an integrally formed piece may often have fewer points of weakness and / or potential failure compared to assemblies of multiple components. This may result in increased overall strength and durability. Further, an integrally formed piece may be simpler and easier to manufacture and / or to assemble because they may substantially eliminate the need for separate parts, fasteners, or connectors, although this is not precluded. This may also lead to cost savings in production. Moreover, an integrally formed piece can reduce the overall weight of the resulting sole plate. This may be particularly advantageous in the context of sports shoes, where weight savings may play a significant role. Further, an integrally formed piece may provide improved performance as wearing, vibration, noise associated with separate moving parts, or the like may be reduced. Further, by eliminating the need for additional components, parts, elements, or the like, an integrally formed piece may reduce material costs, labor costs, and / or assembly time, resulting in cost savings. In addition, fewer components may often mean simplified constructions, which could lead to reduced material waste during production and disposal. This may contribute to more sustainable and eco-friendly sole plates.

### Method

In a further aspect, the objects of the present disclosure are at least partially solved by a method for manufacturing one or more sole plates for one or more articles of footwear, in particular for a sports shoe such as a running shoe, the method comprising: providing a mold; injecting a first material into the mold; and injecting a second material into the mold; wherein injecting the first material and injecting the second material takes place at least partially at the same time.

It is understood that any one or more of the embodiments, features, advantages, examples or the like as described herein with reference to the aspects and / or embodiments relating to the sole plate may be combined with the aspects and / or embodiments relating to the method and vice versa. In particular, it goes without saying that the technical properties shown or described for the sole plate, the advantages and the improvements over the state of the art are likewise applicable to the method and vice versa.

The method may comprise a multiple injection process, in particular a dual-injection process. Said dual-injection process may mean that two materials may be used for injecting. For instance, two feed lines may be employed as described elsewhere herein. However, the method is not limited thereto, and further materials may be employed for injecting.

The method is not limited in the number of injection nozzles. The injection nozzles may be understood as a final part of a feed line through which material is injected into the mold. For instance, one, two, three, four, five, fix, seven, eight, nine, ten, or more injection nozzles may be employed for injecting the first material and / or for injecting the second material.

Injecting the first material and injecting the second material takes place "at least partially" at the same time. This may include that the injecting steps only partially overlap over time. For instance, injecting the first material may start before starting to inject the second material. Further, injecting the first material may start after starting to inject the second material. Nevertheless, both injection steps may have a time span that overlaps. In a preferred embodiment, injecting the first material and injecting the second material takes place at the same time. Thereby, injecting the first material may start at the same time as injecting the second material, and injecting the first material may end at the same time as injecting the second material.

By injecting the first material and injecting the second material at least partially at the same time, various disadvantages of single injection processes can be overcome. For instance, this facilitates usage of different materials. This has the advantage that more functionalities can be provided, for instance in one integral piece.

Further, by injecting the first material and the second material at least partially at the same time, the method of manufacturing may be able to be executed quicker, reducing the overall manufacturing time. This could lead to increased productivity and cost saving. Moreover, injecting the first material and the second material at least partially at the same time may result in a more homogenous mix or a better controlled reaction between the first material and the second material, improving product quality. Further, if the first material and the second material react with each other, injection thereof at least partially at the same time might prevent potential issues such as premature hardening or degradation of one material before the other material is introduced. Further still, injecting the first material and the second material at least partially at the same time may reduce the chance of contamination that could occur if there was a time lapse between the injection of the first material and injecting the second material. It could also reduce labor costs or the need for complex machinery that would otherwise be required for sequential injection.

The described method has the further advantage that all the beneficial functions described herein with reference to the sole plate can be achieved through substantially one engineered piece in substantially one process step.

In a preferred embodiment of the method as described herein, the first material is different than the second material.

This allows to provide different functionalities to one and the same sole plate.

In a preferred embodiment of the method as described herein, the second material has a greater stiffness compared to the first material.

By the provision of a greater stiffness in the second material compared to the first material, similar advantages as set out above in relation to the sole plate can be achieved.

In a preferred embodiment of the method as described herein, the method comprises forming a first sole plate and a second sole plate at the same time.

Forming a first sole plate and a second sole plate at the same time during manufacturing process can present several advantages. For instance, simultaneous formation of both sole plates may improve the production process efficiency, potentially yielding higher output in less time. Further, forming the two sole plates simultaneously may save costs associated with labor, time, and energy consumption. This cost efficiency can lead to overall reduced production costs. Further, this preferred embodiment of the method may ensure consistency between the two sole plates, as they would be made under substantially the same conditions at the same time. This could contribute to the overall quality and uniformity of the sole plates, in particular when the two sole plates are used for a pair of shoes. Moreover, this preferred embodiment of the method may simplify the process flow by eliminating the need to complete one part before starting with another. This may reduce production steps and possible machine downtime. Furthermore, utilization of the production capacity might be better when producing two parts simultaneously, ultimately leading to higher profitability.

When reference is made herein to forming a first sole plate and a second sole plate "at the same time", minor variations regarding the specific time periods for each sole plate may pertain. For instance, depending on the environmental conditions and / or specific material compositions, it may be the case that forming one of the sole plate may take slightly longer or slightly shorter compared to the other sole plate. This means that manufacturing tolerances should be included. Nevertheless, when the injection steps are performed and, subsequently, the mold is opened, both sole plates are considered to be formed at the same time.

In a preferred embodiment of the method as described herein, the first sole plate is a sole plate for a right shoe and the second sole plate is a sole plate for a left shoe.

This further contributes to the foregoing advantages set out in relation to the first sole plate and the second sole plate. In particular, this may lead to an improved performance to the wearer of the shoes, in particular when they are used for running during track and field events.

In a preferred embodiment of the method as described herein, the first sole plate comprises: a first portion arranged on a medial side of the first sole plate; and a second portion arranged on a lateral side of the first sole plate; wherein the second sole plate comprises: a first portion arranged on a lateral side of the second sole plate; and a second portion arranged on a medial side of the second sole plate; wherein injecting the first material comprises injecting the first material in the first portion of the first sole plate and in the first portion of the second sole plate, and wherein injecting the second material comprises injecting the second material in the second portion of the first sole plate and in the second portion of the second sole plate.

In this manner, the method has the advantage that a right sole plate and a left sole plate can be manufactured along with the advantages as described elsewhere herein. In particular, the sole plates may be asymmetrical, as they have a difference in geometry and / or in materials and / or in material properties. For instance, a stiffer and / or harder material may be provided on a lateral side of one shoe (right shoe) and on a medial side of another shoe (left shoe). Further, a less stiff and / or softer material may be provided on a medial side of the one shoe (right shoe) and on a lateral side of the other shoe (left shoe). In this manner, it may be ensured that the sole plate has the benefit that a less stiff and / or softer material is provided on the side of the sole plate which may come into contact with the ground first.

In a preferred embodiment of the method as described herein, the first sole plate and the second sole plate form an asymmetric pair of sole plates.

This contributes to the advantages mentioned elsewhere herein. In particular, typically in conventional shoes, a right shoe may be mirrored to a respective left shoe. This usually provides the same functionality and / or symmetrical functionalities to the foot of the wearer. However, when used for instance during running a curve or the like, such a design may not lead to optimum results. Rather, some types of running, such as running a curve, or the like may lead to an asymmetrical movement of the foot of the wearer. Hence, providing for a respective asymmetric pair of sole plates can improve performance to the wearer.

The advantage of having an asymmetric pair of sole plates, where the first sole plate and the second sole plate are not identical, lies in the specialized functions they can provide. The differences enable different performance characteristics and / or different functionalities and may vary depending on the specific features of each sole plate. The asymmetry can help in enhancing performance for the wearer, providing better comfort and reducing the risk of injury, adapting better to specific characteristics and needs of each foot, considering that foot biomechanics are not necessarily symmetrical.

The asymmetric pair of sole plates further allows catering to the difference in needs of each foot when moving in a certain way. For instance, when running in a specific direction of a track. Alternatively or additionally, the asymmetric pair of sole plates may have benefits if the athlete is running in a specific running condition.

Merely for the purpose to support an understanding of the term "asymmetric" as used in the present disclosure, the following may be useful. Said understanding may be particularly illustrative when the term "asymmetric" is compared to the term "symmetric": two sole plates may be symmetric in case said pair of sole plates has a symmetry about a common axis. This may mean that one sole plate is a mirror image of the respective other sole plate. Contrary to this, two sole plates may be asymmetric in case said part of sole plates do not have a symmetry about a common axis. That is, there may be no axis about which the two sole plates have a symmetry. Put differently, an asymmetric pair of sole plates may mean that a mirror of one sole plate is not equal to the respective other sole plate.

In a preferred embodiment of the method as described herein, injecting the second material comprises using more injection nozzles compared to injecting the first material.

This has the advantage that by using more injection nozzles, the second material in the second portion may be provided with a greater stiffness more easily. For instance, more material may be provided at the same time as compared to using less injection nozzles. This excess of material may culminate in an additional increase of the stiffness (e.g., by way of an increased density). For instance, by using more nozzles, a greater volume of material can be provided at substantially the same time to the second portion. In this manner, any losses in injection nozzles may be reduced, because the velocity of injection can be reduced to a certain extent. This may have advantages as frictional losses of the second material passing along internal walls of feed lines to said injection nozzle may be reduced.

### Sole plate from method

In a further aspect of the present disclosure, the objects are at least partially solved by a sole plate for an article of footwear, in particular for a sports shoe such as a running shoe, the sole plate being manufactured according to the any one of the aspects and / or embodiments of the method as described in here.

It goes without saying that the technical properties shown or described elsewhere herein for the sole plate for an article of footwear, the advantages and the improvements over the state of the art are likewise applicable to the sole plate manufactured according to the method described in here.

The skilled person will readily recognize if a sole plate for an article of footwear is manufactured by way of the method as described in here or by way of a different method. For instance, when injecting the first material and injecting the second material takes place at least partially at the same time, this may lead to an improved material composition of the sole plate. For instance, cooling and, thereby, hardening of the first material and the second material may take place at substantially the same time. This may be readily recognizable by way of the specific structure of the sole plate. Moreover, injecting the first material and the second material at least partially at the same time may result in a more homogenous mix and / or a better controlled reaction between the first material and the second material. This leads to an improved product quality, which distinguishes the sole plate so produced from sole plates made from other methods.

Further, the skilled person may readily recognize that the sole plate for an article of footwear manufactured by way of the method as described in here, as the method described in here allows a seamless transition from one material to the other material (e.g., from the first material to the second material and / or from the second material to the first material).

### Apparatus

In a further aspect of the present disclosure, the objects are at least partially solved by an apparatus for manufacturing one or more sole plates for one or more articles of footwear, in particular for a sports shoe such as a running shoe, the apparatus comprising means for performing a method according to any one of the embodiments described in here.

The respective features and advantages as mentioned with respect to the method for manufacturing one or more sole plates for one or more articles of footwear are also applicable to the apparatus, as understood.

The apparatus may comprise a mold, one or more first injection nozzles for injecting the first material, one or more second injection nozzles for injecting the second material, and control means, wherein the control means may be configured to control injecting, such that injecting the first material and injecting the second material takes place at least partially at the same time. The apparatus may optionally comprise a cover for covering the mold at least partially.

A manufacturing apparatus designed in such a way may take up only a relatively small amount of building space and it may allow the manufacture to be automated to a large extent. It can therefore be particularly suitable for series and mass production. The various manufacturing parameters may also be individually adjusted so that individualized sole plates can be manufactured using a single manufacturing apparatus.

### Materials

In a preferred embodiment of the sole plate for an article of footwear as described herein, the first material comprises one or more of the following: polyamide, PA, polyurethane, PU, thermoplastic polyurethane, TPU, and / or wherein the second material comprises one or more of the following: polyamide, PA, in particular fiber -reinforced PA, such as carbon fiber-reinforced PA, wherein the carbon content by weight is at least 1%, preferably at least 2%, more preferably at least 4%, most preferably at least 6%.

These materials have the advantage to provide sufficient stiffness, hardness, and / or flexural modulus as described elsewhere herein. Further, these materials can contribute to an enhanced performance for the wearer when a shoe comprising a sole plate is worn. In addition, these materials may be relatively easy to procure, are cost-effective, and are widely accepted in the sector of soles for shoes.

### Article of footwear

In a further aspect of the present disclosure, the objects are at least partially solved by an article of footwear, in particular a sports shoe such as a running shoe, the article of footwear comprising: a sole plate as described in any one of the embodiments in here; an upper; wherein the sole plate is attached to the upper.

Since the article of footwear of this aspect comprises the sole plate for an article of footwear as described elsewhere, it is understood that the technical properties shown or described for the sole plate for an article of footwear, the advantages and the improvements over the state of the art are likewise applicable to the article of footwear with and vice versa.

It is noted that the sole plate can be attached to the upper by any kind of suitable means of attachment. As understood by the skilled person, attaching the sole plate to the upper of a shoe may involve various methods and techniques depending on the type of shoe, the materials used, and /or the desired level of durability and robustness of the upper.

In a preferred embodiment of the article of footwear as described herein, the article of footwear is a running shoe, in particular used for athletics tracks. Such shoes may be used for instance during track and field events. As noted elsewhere herein, the article of footwear may be used for any kind of athletic activity. Nevertheless, when used for running and in particular for running on athletics tracks, the advantages are even more pronounced. Alternatively or additionally, the advantages are pronounced when used for high-jump or any other sports discipline in track and field sport events.

### Pair of shoes

In a further aspect of the present disclosure, the objects are at least partially solved by a pair of shoes comprising a right shoe and a left shoe, wherein the right shoe comprises a first sole plate as described in any one of the embodiments in here; and wherein the left shoe comprises a second sole plate as described in any one of the embodiments in here.

Since the pair of shoes of this aspect comprises a first sole and a second sole plate for an article of footwear as described elsewhere, it is understood that the technical properties shown or described for the sole plate for an article of footwear, the advantages and the improvements over the state of the art are likewise applicable to the pair of shoes and vice versa.

### 4. Brief description of the figures

In the following, the invention will be described in more detail with reference to the following figures:
Fig. 1: shows a first sole plate and a second sole plate, each respectively for an article of footwear, in particular a sports shoe, according to an embodiment of the present disclosure.
Fig. 2: shows a detailed view of Fig. 1, according to an embodiment of the present disclosure.
Fig. 2a: shows a detailed view of Fig. 1, according to an embodiment of the present disclosure.
Fig. 3: shows a first sole plate and a second sole plate, each respectively for an article of footwear, in particular a sports shoe, during manufacturing thereof, according to an embodiment of the present disclosure.
Fig. 4: shows a flow chart of a method for manufacturing one or more sole plates, according to an embodiment of the present disclosure.
Fig. 5: shows a second sole plate for an article of footwear, in particular a sports shoe, according to an embodiment of the present disclosure.

### 5. Detailed description of the preferred embodiments

In the following only some possible embodiments of the invention are described in detail. However, the present invention is not limited to these, and a multitude of other embodiments are applicable without departing from the scope of the invention. The presented embodiments can be modified in a number of ways and combined with each other whenever compatible and certain features may be omitted in so far as they appear dispensable. In particular, the disclosed embodiments may be modified by combining certain features of one embodiment with one or more features of another embodiment.

It is to be understood that not all features of the described aspects / embodiments have to be present for realizing the technical advantages provided by the present disclosure, which is defined by the subject-matter of the claims. The disclosed aspects / embodiments may be modified by combining certain features of one aspect / embodiment with one or more features of another aspect / embodiment. Specifically, the skilled person will understand that features, and / or functional elements of one aspect / embodiment can be combined with technically compatible features, and / or functional elements of any other aspect / embodiment of the present disclosure given that the resulting combination falls within the definition of the present disclosure.

While the embodiments below are described primarily with reference to a sole plate for an article of footwear, in particular a sports shoe, the skilled person will recognize that the disclosure according to the invention can equally be applied in a plurality of different technical fields and / or use cases.

Throughout the present figures and specification, the same reference numerals refer to the same elements. For the sake of clarity and conciseness, certain features, parts, elements, aspects, components and / or steps of certain embodiments are presented without undue detail where such detail would be apparent to the skilled person in the art in light of the teachings herein and / or where such detail would obfuscate an understanding of more pertinent aspects of the embodiments.

As understood by the skilled person and / or in order to avoid redundancies, reference is also made to the explanations in the preceding sections, which also apply to the following detailed description. Further, not all features, parts, elements, aspects, components and / or steps are expressly indicated by reference signs for the sake of brevity and clarity. This particularly applies, where the skilled person recognizes that such features, parts, elements, aspects, components and / or steps are present in a plurality.

### Definitions

The term "heel portion" and / or "heel region" of a sole plate as used herein may refer to the back part of the sole plate, e.g., the rear part of the sole plate, which is usually in proximity to the heel of the foot of the wearer, when worn during ordinary use. In said heel portion and / or heel region of the sole plate, an anterior end of a foot of the wearer may be received. In particular, the "calcaneal region" of a foot of a wearer may be received. The calcaneus is a large bone that makes up the heel of the foot.

The term "toe portion" and / or "toe region" of a sole plate as used herein may refer to the front part of the sole plate, e.g., the forefoot part of the sole plate, in which toes of the foot of the wearer can be received, when worn during ordinary use. The toes of the foot of the wearer may include the big toe, and / or of the big toe knuckle. It may include an anterior end of the foot, when worn. Further, the toe portion and / or the toe region may include distal phalanges, intermedial phalanges and proximal phalanges of a foot of a wearer, when worn. The toe portion and / or the toe region may additionally include a frontal part of the metatarsal bones of a foot of a wearer, when worn.

The term "medial", "medial side", "medial side region", and / or "medial side portion" of a sole plate as used herein may refer to an inner side of the sole plate. This inner side may be closer to a centerline of the body of the wearer, when the shoe comprising the sole is worn, compared to a lateral side. This inner side may extend from a toe region to a heel region. This inner side may comprise substantially about half of the part of the sole plate that is arranged medially as seen from a heel to toe midline of the sole plate. Said heel to toe midline may be passing along the heel to toe axis of the sole plate.

The term "lateral", "lateral side", "lateral side region", and / or "lateral side portion" of a sole plate as used herein may refer to an outer side of the sole plate. This outer side may be farther away from a centerline of the body of the wearer, when the shoe comprising the sole is worn, compared to a medial side. This outer side may extend from a toe region to a heel region. This outer side may comprise substantially about half of the part of the sole plate that is arranged laterally as seen from a heel to toe midline. Said heel to toe midline may be passing along the heel to toe axis of the sole plate.

The term "vertical axis" as used herein may substantially correspond to the wearer's main body axis from head to foot when the wearer stands on the ground.

Unless otherwise stated, the term "substantial" or "substantially" as used in the present context may be understood to a great or significant extent or for the most part or essentially. In particular, manufacturing tolerances are included by this term. Hence, any values or arrangements described by using the term "substantial" or "substantially" may slightly deviate from the described values or arrangements.

The term "and / or" is only an association relationship describing associated objects and represents that three relationships may exist. For example, A and / or B may represent three conditions: i.e., independent existence of A, existence of both A and B and independent existence of B. In addition, the character "/" in the disclosure usually represents that previous and next associated objects form an "or" relationship.

The terms "bottom", "top", "one end", "the other end", "outer side", "upper", "above", "inner side", "under", "below", "horizontal", "coaxial", "central", "end" "part", "length", "outer end" etc., which indicate the orientation or positional relationship, are based on the orientation or positional relationship shown in the drawings.

The terms "upper", "above", "below", "under" and the like as used in the present invention to indicate a relative position in space are used for the purpose of facilitating explanation to describe a sole plate, an article of footwear, an element, a part, an object and / or a feature shown in the drawings relative to the relationship of another article of footwear, element, part, object and / or feature.

### Description of figures

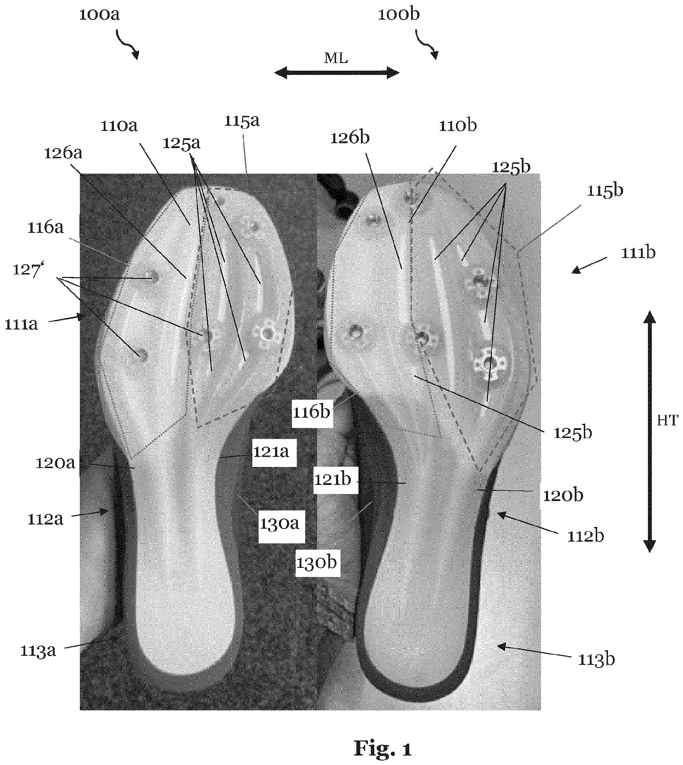

**Fig. 1** shows a first sole plate 110a and a second sole plate 110b, each respectively for an article of footwear, in particular for a sports shoe 100a, 100b, according to an embodiment of the present disclosure.

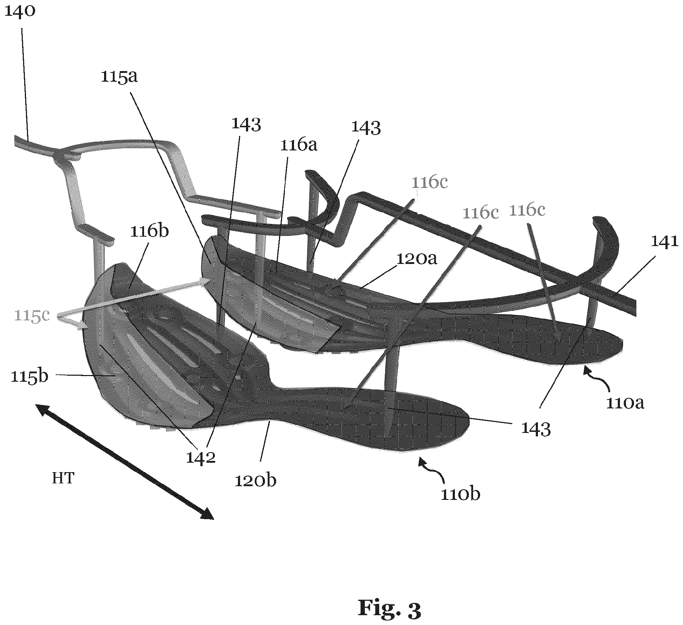

The sole plate 110a, 110b comprises a first portion 115a, 115b (indicated in an exemplary manner by way of the dashed boxes 115a, 115b) comprising a first material 115c (as indicated in Fig. 3). The sole plate 110a, 110b also comprises a second portion 116a, 116b (indicated in an exemplary manner by way of the dotted boxes 116a, 116b) comprising a second material 116c (as indicated in Fig. 3). The second material 116c has a greater stiffness than the first material 115c. When the sole plate 110a, 110b is for a right shoe 100a, the first portion 115a is arranged on a medial side 121a of the sole plate 110a and the second portion 116a is arranged on a lateral side 120a of the sole plate 115a. Additionally or alternatively, when the sole plate 110b is for a left shoe 100b, the first portion 115b is arranged on a lateral side 120b of the sole plate 110b and the second portion 116b is arranged on a medial side 121b of the sole plate 110b. Moreover, as can be gathered from Fig. 1, the sole plate 110a, 110b comprises one or more first apertures 125a, 125b.

It is noted that the sole plate 110a may be a first sole plate 110a, corresponding to a right sole plate 110a, i.e., a sole plate 110a for a right shoe 100a. Further, the sole plate 110b may be a second sole plate 110b, corresponding to a left sole plate 110b, i.e., a sole plate 110b for a left shoe 100b.

As described elsewhere herein, when running on an athletics track, such as during a track and field event, the runners typically run on a curved track. This may be the case when they run in a counterclockwise direction on the athletics track. For this, it was found that the runners tend to lean inwards on their left side. Accordingly, means must be provided in order to take these conditions for athletics tracks into account. The inventors found that the sole plate 110a, 110b for a shoe 100a, 100b as proposed in here, can provide for such means. In particular, advances can be achieved by the sole plate 110a, 110b that are specifically tailored to impacts occurring during running on athletics tracks. In a similar manner, advantages can be achieved when an athlete is running a curved track in preparation for high-jump or any other sports discipline in track and field sport events.

The second material may have a stiffness compared to the first material of at least 1.1, preferably at least 1.2, more preferably at least 1.5, even more preferably at least 2.0, further more preferably at least 3.0, further more preferably at least 4.0, further more preferably at least 5.0, most preferably at least 6.0.

Further, the second material may have a greater hardness compared to the first material. For instance, the first material may have a shore D hardness of at most 70 shore D, preferably at most 65 shore D, most preferably at most 60 shore D, and / or the second material may have a shore D hardness of at least 65 shore D, preferably at least 70 shore D, most preferably at least 72 shore D.

The shore D hardness may be determined using a durometer, such as a device that presses a specific indenter into the surface of the material and measures the depth of indentation. In this manner, a force of the device may be fixed, and the depth may be measured for said fixed force. The skilled person is readily aware of determining the shore D hardness.

The shore D scale is commonly used for harder materials, while the shore A scale is commonly used for softer materials. Measuring the shore D hardness provides insight into the material's flexibility, resilience, and suitability for various applications. The shore D scale ranges from 0 to 100, with higher numbers indicating greater hardness.

In one particular and non-limiting example, the first material may comprise a polyether block (e.g., Pebax^{®} 63R53), being a thermoplastic elastomer made of flexible polyether and rigid polyamide. This material may be based on renewable resources. Said material may have a hardness of 60 shore D. In one particular and non-limiting example, the second material may comprise a fiberglass reinforced polyamide (e.g., Rilsan^{®} BZM 7). This material may be based on renewable resources. Said material may have a hardness of 72 shore D.

The second material may have a greater flexural modulus compared to the first material. For instance, the first material may have a flexural modulus of at most 1000 MPa, preferably at most 800 MPa, more preferably at most 600 MPa, even more preferably at most 400 MPa, further more preferably at most 300 MPa, most preferably at most 250 MPa, and/or the second material may have a flexural modulus of at least 800 MPa, preferably at least 1000 MPa, more preferably at least 1200 MPa, even more preferably at least 1300 MPa, further more preferably at least 1400 MPa, most preferably at least 1500 MPa. In one particular and non-limiting example, the first material may have a flexural modulus of about 245 MPa. In one particular and non-limiting example, the second material may have a flexural modulus of about 15000 MPa (15 thousands MPa).

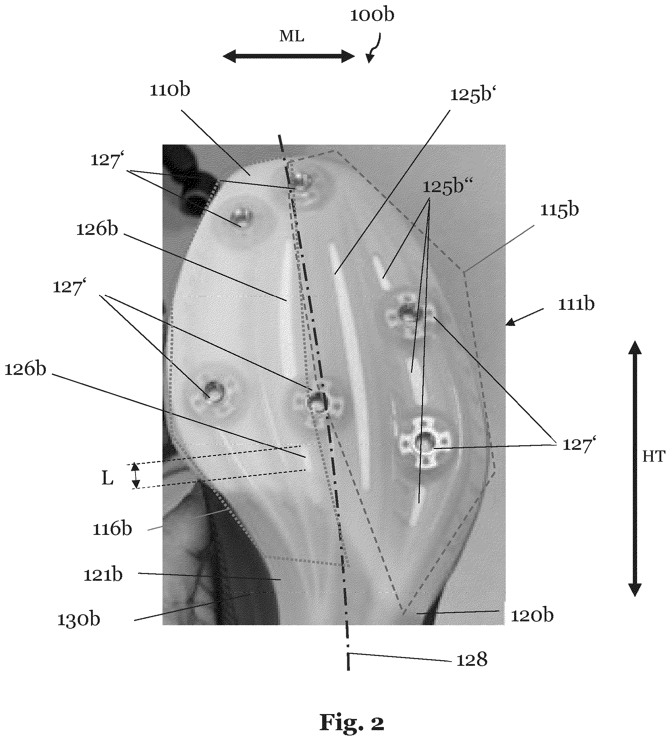

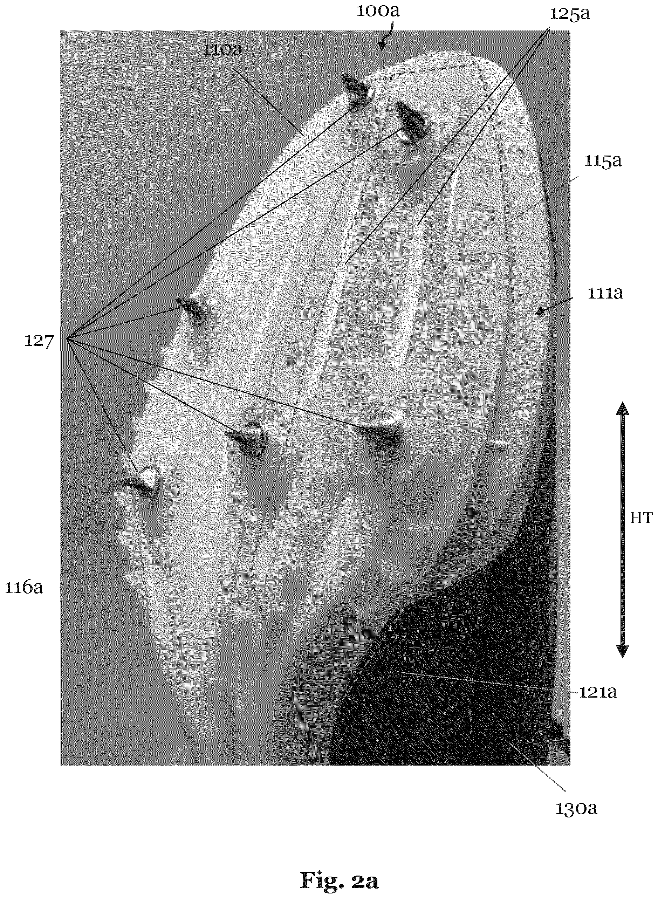

Moreover, as best seen in **Fig. 2a** (but also derivable by way of the one or more receptacles 127' in Fig. 1 and Fig. 2), the sole plate 110a, 110b may comprise one or more spikes 127 that are arranged on the sole plate 110a, 110b, preferably on a forefoot portion 111a, 111b of the sole plate 110a, 110b. Further, as best seen in Fig. 1 and Fig. 2, the sole plate 110a, 110b may comprise one or more receptacles 127' that are arranged on the sole plate 110a, 110b, preferably on a forefoot portion 111a, 111b of the sole plate 110a, 110b. The one or more receptacles 127' are configured to receive the one or more spikes 127.

Although the one or more spikes 127 (as shown in Fig. 2a) are preferably arranged on the forefoot portion 111a, 111b of the sole plate 110a, 110b, they may be arranged additionally or alternatively on different portions 112a, 112b, 113a, 113b of the sole plate 110a, 110b. In one example, the one or more spikes 127 may additionally or alternatively be arranged on a midfoot portion 112a, 112b of the sole plate 110a, 110b. In one example, the one or more spikes 127 may additionally or alternatively be arranged on a rearfoot portion 113a, 113b of the sole plate 110a, 110b.

In various embodiments, the one or more spikes 127 may be arranged so as to follow a certain pattern that is designed such that traction to the ground can be improved. In various embodiments, the arrangement of the one or more spikes 127 comprises one or more groups of spikes 127 that may be arranged arbitrarily and one or more groups of spikes 127 that may be arranged so as to follow a certain pattern that is designed such that traction to the ground can be improved. As understood, the arrangement of the one or more spikes 127 may vary depending on the type of ground for which the sole plate 110a, 110b is made to be used.

The one or more spikes 127 (as shown in Fig. 2a) may be attached to the sole plate 110a, 110b and or to the one or more receptacles 127'. Various attachment means are encompassed in the present disclosure that may be employed in order to attach the one or more spikes 127 and the sole plate 110a, 110b together. Such attachment means include one or more or all of the following non-exhaustive list: fasteners (such as screws, bolts, nuts, rivets, clamps, staples), adhesives and glues (various types of adhesive substances may bond together when they dry or cure, a double-sided tape comprising adhesive on both sides of a tape), welding (melting portions of the parts at least partially and fusing them together), soldering (melting a low-temperature part for joining), mechanical connections (latches and catches, hooks and loops, zip ties), magnetic attachments, snap-fit connections (interlocking components that snap together). As understood by the skilled person, the way in which the spikes 127 are attached to the sole plate 110a, 110b may depend on the materials involved and / or the specific intended purpose.

It is noted that in a preferred embodiment, the one or more spikes 127 may be fixedly attached to the sole plate 110a, 110b, i.e., such that they are not removable. In another preferred embodiment, the one or more spikes 127 may be screwed-in to the sole plate 110a, 110b, i.e., such that they are removable.

As can be seen in Fig. 1 (and as best seen in Fig. 2), the one or more first apertures 125a, 125b and / or the one or more second apertures 126a, 126b may be arranged between two or more of the spikes 127 and / or two or more of the receptacles 127'. For instance, the largest first aperture 125b may be indicated as 125b' as shown in Fig. 2 and may have a spike 127 on its lateral side 120b (to the righthand side in Fig. 2) and a spike 127 on its medial side 121b (to the left-hand side in Fig. 2). As can be further seen in Fig. 1 and Fig. 2 (and as best seen in Fig. 2a), one or more spikes 127 and / or one or more of the receptacles 127' may be arranged between two or more first apertures 125a, 125b and / or between two or more second apertures 126a, 126b. For instance, the three lateral most first apertures 125b may be indicated as 125b" as shown in Fig. 2 and may have receptacles 127' and / or spikes 127 arranged between each of two pairs of these three first apertures 125b".

**Fig. 2** shows a detailed view of Fig. 1, according to an embodiment of the present disclosure. Exemplarily, merely a left shoe 100b and, correspondingly, a left sole plate 110b is shown. A right shoe 100a and a right sole plate 110a are not shown in Fig. 2 for brevity only.

As can be seen from Fig. 2, when the sole plate 110a, 110b is for a left shoe 100b, the first portion 115b is arranged on a lateral side 120b of the sole plate 110b and the second portion 116b is arranged on a medial side 121b of the sole plate 115b. This may be best seen when looking at the heel to toe midline 128 of the sole plate 110b as exemplarily indicated in Fig. 2 by way of the dash dotted line passing along the heel to toe axis HT. Said midline 128 of the sole plate 110b may be separating the sole plate 110b in substantially two halves, i.e., about a half on the medial side 121b and about a half on the lateral side 120b. As understood by the skilled person, the half on the medial side 121b and on the lateral side 120b of the sole plate 110b may in some cases slightly vary, as the sole plate 110b may be asymmetric. This variation is expressed by the term about. It is noted that a similar arrangement of the first portion 115a and the second portion 116a can be imagined for the sole plate 110b when being used for a right shoe 100a. This is also explained with respect to Fig. **1****.**

It is noted that although the first portion 115b is arranged on a lateral side 120b of the sole plate 110b and the second portion 116b is arranged on a medial side 121b of the sole plate 115b, it is not precluded that there is a part of the first material that is located on the medial side 121b of the sole plate 110b in proximity to the midline 128. This may be recognizable from the exemplary dashed box 115b (indicating the arrangement of the first portion 115b) and the exemplary dash dotted midline 128 in Fig. 2. Further, it is not precluded that there is a part of the second material that is located on the lateral side 120b of the sole plate 110b in proximity to the midline 128. This may be recognizable from the exemplary dotted box 116b (indicating the arrangement of the second portion 116b) and the exemplary dash dotted midline 128 in Fig. 2.

As can be seen in Fig. 2 (and also in Fig. 1), the one or more first apertures 125a, 125b have an elongated shape, preferably a shape of one of a slit, a groove, a cut, and a vent. As noted elsewhere herein, these shapes of the apertures 125a, 125b further contribute to the advantage that the stability of the sole plate 110a, 110b be substantially maintained whilst the material of the sole plate 110a, 110b is configured to expand at least partially into the one or more first apertures 125a, 125b. In addition, the specific shapes may be described as follows and have the following advantages: a slit may be a rather long, narrow opening and / or a cut in a material of the sole plate 110a, 110b. A slit typically has a length that is greater than its width, in some instances its length is significantly greater than is width. For instance, its length may be greater than its width by a factor of at least two, at least three, at least four, at least five, at least six, at least seven, at least eight, at least nine, at least ten or even greater. Slits can be straight or curved and they can be composed of one or more straight segments and one or more curved segments. The segments can be arbitrarily arranged along a line or in an alternating manner along a line. Slits may be used to allow passage or flow of air, light, or other substances therebetween. In addition, the slits may provide for additional functionalities, e.g., they may contribute to the outer appearance. A groove may be a long, narrow channel and / or recessed portion, which may be cut into a material of the sole plate 110a, 110b. The grooves may be useful for various purposes, such as guiding the flow of liquids, or the like. This may aid in removing moisture resulting from sweat or the like. In turn this can also improve odor. The grooves may be wide or narrow. The grooves may appear in a variety of shapes, including one or more of straight segments, curved segments, corner segments, regular segments, or irregular segments. The segments can be arbitrarily arranged along the longitudinal direction of the groove or in an alternating manner along the longitudinal direction of the grove. A cut may refer to a separation or division made in a material, such as a material of the sole plate 110a, 110b described herein. Cuts may be straight or angled and can be used for a wide range of purposes, including creating openings, shaping materials, or altering the structure of the sole plate 110a, 110b. The cuts may appear in a variety of shapes, including one or more of straight segments, curved segments, corner segments, regular segments, or irregular segments. The segments can be arbitrarily arranged along the longitudinal direction of the cut or in an alternating manner along the longitudinal direction of the cut. A vent is an opening or passage in a material, such as a material of the sole plate 110a, 110b as described herein. A vent may allow for the movement of gases, such as air, or liquids therethrough. Vents may be useful in regulating a temperature of the foot of the wearer. The vents may be implemented by various different shapes and / or size sizes, including one or more of straight segments, curved segments, corner segments, regular segments, or irregular segments. The segments can be arbitrarily arranged along the longitudinal direction of the vent or in an alternating manner along the longitudinal direction of the vent.

Independent of the shape of the one or more first apertures 125a, 125b, they may still have a closed boundary, i.e., they are enclosed by a periphery of the sole plate 110a, 110b.

The three lateral most first apertures 125b (indicated as 125b" in Fig. 2) may illustrate in one example of what could be understood under a segmented and / or a discontinued shape described elsewhere herein. The three first apertures 125b" may be regarded as three separate segments, which may have a wider or narrower extension in the transverse direction (substantially parallel to the medial to lateral axis ML) compared to other segments of the three first apertures 125b". Fig. 2 also shows by way of the first apertures 125b" that the available space of the sole plate 110b may be used to an optimum degree. This is particularly of advantage, as the sole plate 110b only allows for a limited available space. Each of the three lateral most first apertures 125b" may define a sub-aperture. In the example of Fig. 2, the first apertures 125b" are not connected by a material of the sole plate 110b to one another. Rather, the three first apertures 125b" are not connected and, therefore, regarded as discontinued. However, as shown in Fig. 2, the overall circumference of the three first apertures 125b" is within the material of the sole plate 110b and has a closed boundary. The three first apertures 125b" may form one group as described elsewhere herein.

Further, as can be gathered from Fig. 2 (and also from Fig. 1), the one or more first apertures 125a, 125b define through holes.

Moreover, the one or more first apertures 125a, 125b may extend in a longitudinal direction of the sole plate 110a, 110b and in a transverse direction of the sole plate 110a, 110b. The extension in the longitudinal direction may be larger compared to the extension in the transverse direction. The longitudinal direction may be substantially parallel and / or the same as the heel to toe axis HT of the sole plate 110a, 110b. The transverse direction may be substantially parallel and / or the same as the medial to lateral axis ML of the sole plate 110a, 110b.

Further, the one or more first apertures 125a, 125b may be arranged in the first portion 115a, 115b of the sole plate 110a, 110b. Moreover, the sole plate 110a, 110b may comprise one or more second apertures 126a, 126b arranged in the second portion 116a, 116b of the sole plate 110a, 110b.

Further, as shown in Fig. 2 (and also in Fig. 1), the number of the one or more first apertures 125a, 125b may be different than the number of the one or more second apertures 126a, 126b. Preferably, the number of the one or more first apertures 125a, 125b may be greater than the number of the one or more second apertures 126a, 126b.

Moreover, the one or more first apertures 125a, 125b and / or the one or more second apertures 126a, 126b may have a length L (as indicated exemplarily in Fig. 2 for one second aperture 126b of the one or more second aperture 126b in the lower left part of the forefoot portion 111b of the sole plate 110b), preferably in a longitudinal direction (corresponding to the heel to toe axis HT) of the sole plate 110a, 110b, of at least 1 cm, preferably at least 2 cm, more preferably at least 4 cm, even more preferably at least 6 cm, further more preferably at least 7 cm, further more preferably at least 8 cm, further more preferably at least 10 cm, further more preferably at least 12 cm, further more preferably at least 14 cm, most preferably of at least 15 cm. Additionally or alternatively, the one or more first apertures 125a, 125b and / or the one or more second apertures 126a, 126b have a length L, preferably in a longitudinal direction (corresponding to the heel to toe axis HT) of the sole plate 110a, 110b, of at most 25 cm, preferably at most 23 cm, more preferably at most 20 cm, even more preferably at most 18 cm, further more preferably at most 16 cm, most preferably of at most 15 cm.

Further, the sole plate 110a, 110b may have a maximum thickness of at most 10 mm, preferably at most 8 mm, more preferably at most 6 mm, even more preferably at most 5 mm, even more preferably at most 4 mm, most preferably at most 3 mm. As described elsewhere herein, the sole plate 110a, 110b may comprise a varying thickness, which could contribute to a tapered shape of the sole plate 110a, 110b. By varying the thickness on the sole plate 110a, 110b, various different effects can be achieved, such as differences in the stiffness, hardness, and / or flexural modulus of the sole plate 110a, 110b.

The thickness may be measured substantially along a vertical axis when the sole plate 110a, 110b is used according to its ordinary use. The thickness of the sole plate 110a, 110b in Fig. 2 may be substantially parallel to a line projecting substantially perpendicularly through the image plane.

Moreover, the sole plate 110a, 110b may be an integrally formed piece. Further, the sole plate 110a, 110b may extend from a heel region (similar to reference sign 113a, 113b) of the sole plate 110a, 110b to a toe region (similar to reference sign 111a, 111b) of the sole plate 110a, 110b.

It is noted that the "integrally formed" piece may be understood such that on various portions of the piece it is not possible to determine a discrete material boundary. Thereby, the skilled person may readily distinguish based on the sole plate 110a, 110b whether it may be made from one integrally formed piece or from a plurality of pieces.

Fig. 2a shows a detailed view of Fig. 1, according to an embodiment of the present disclosure. Exemplarily, merely a right shoe 100a and, correspondingly, a right sole plate 110a is shown. A left shoe 100b and a left sole plate 110b are not shown in Fig. 2a for brevity only. The embodiment of Fig. 2a is similar compared to the one of Fig. 1 and 2. Therefore, the description of the embodiments of Fig. 1 and 2 may equally apply to the one of Fig. 2a and only some of the differences may be highlighted in here.

In Fig. 2a, one or more spikes 127 are shown that are received in the one or more receptacles 127' as depicted in Fig. 1 and Fig. 2. However, it may also be conceivable that the one or more spikes 127 may be integrally formed with the sole plate 110a, 110b, meaning that the one or more receptables 127' may not be necessary in such examples.

The one or more spikes 127 of Fig. 2a are depicted in a cone shape. However, the one or more spikes 127 are not limited to such geometric examples. In particular, the one or more spikes 127 may be implemented in various shapes and configurations depending on the type of running surface and / or the specific needs of the athlete.

For instance, the following shapes and / or configurations may be encompassed in a non-exhaustive manner.

The one or more spikes 127 may have a pyramid-shaped point. These spikes 127 may be quite versatile. They provide good traction on a variety of surfaces, including track and grass.

The one or more spikes 127 may be needle spikes, which may be thin and needle-like, offering minimal surface area. They are designed for use on softer surfaces like grass or well-maintained tracks.

The one or more spikes 127 may have a Christmas tree shape. Named for their resemblance to Christmas trees, these spikes have a pyramid shape with multiple points. They offer a good balance of traction and durability and are suitable for various running surfaces.

The one or more spikes 127 have be bladed spikes 127. These spikes 127 have a flat, blade-like shape, providing more surface area than pyramid spikes. Bladed spikes 127 may be useful on synthetic tracks and can offer good grip.

The one or more spikes 127 may be wrench spikes 127. These spikes 127 have a unique, twisted shape resembling a wrench. They are designed for maximum traction on soft or muddy surfaces, making them suitable for cross-country running.

The one or more spikes 127 may be hexagonal spikes 127. These spikes 127 have a six-sided shape, offering a combination of grip and stability. They are commonly used in sprinting events on tracks.

The one or more spikes 127 may be compression spikes 127. These spikes 127 have a flatter, wider shape and are designed to compress the track slightly upon impact, providing better energy return. They are often used in sprinting events.

The choice of the one or more spikes 127 may depend on factors such as the type of running, the running surface, and personal preference.

Fig. 3 shows a first sole plate 110a and a second sole plate 110b, each respectively for an article of footwear, in particular for a sports shoe 100a, 100b, during manufacturing thereof, according to an embodiment of the present disclosure.

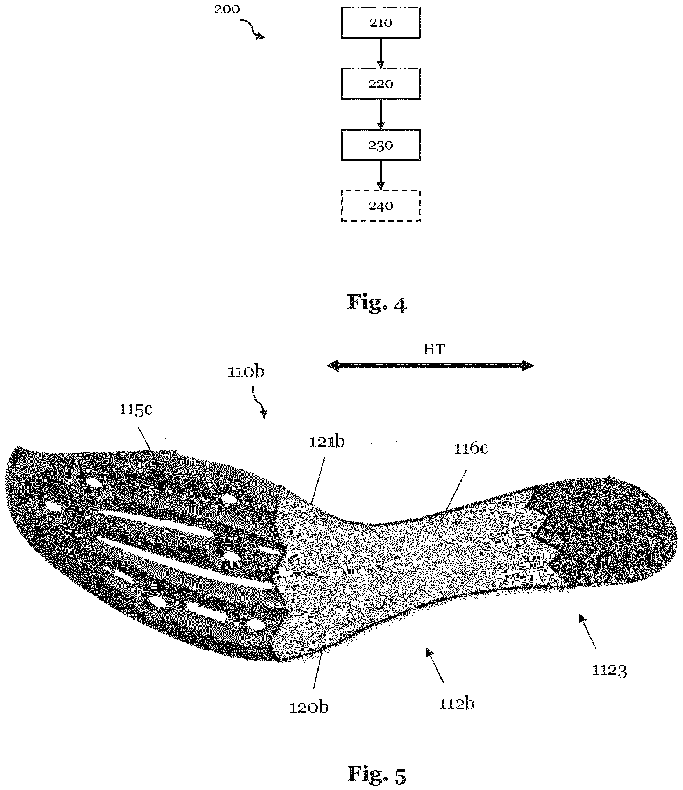

In particular, Fig. 3 may show the first sole plate 110a and a second sole plate 110b during the method 200 described in detail with reference to Fig. **4.** As can be seen, injecting 230 (as can be seen in Fig. 4) the second material 116c may comprise using more injection nozzles 143 compared to the injection nozzles 142 used for injecting 220 (as can be seen in Fig. 4) the first material 115c. Fig. 3 shows that four injection nozzles 143 are used for injecting 230 the second material 116c. Further, Fig. 3 shows that two injection nozzles 142 are used for injecting 220 the first material 115c. Moreover, Fig. 3 also shows a feed line 140 for a first material 115c and a feed line 141 for a second material 116c. However, it is noted that various different numbers of injection nozzles 142, 143 and / or various different number of feed lines 140, 141 may be employed.

Moreover, injecting 230 the second material 116c using more injection nozzles 143 compared to injecting 220 the first material 115c can provide a range of benefits. For instance, more nozzles may mean that the second material 116c can be distributed over a wider area or a larger volume. Although not preferred, it may be possible that the first material 115c and the second material 116c may need to be mixed. Thereby, using more nozzles for the second material 116c might improve the quality of the mix and the uniform dispersion of the materials 115c, 116c. Further, additional injection nozzles 143 may give better control over the amount and rate of the second material's 116c injection 230. Furthermore, more injection nozzles 143 compared to injection nozzles 142 can potentially increase the rate of injection 230 of the second material 116c, thereby speeding up the entire process. In addition, certain material properties like viscosity or reaction rate may make it beneficial to use more injection nozzles 143 for smooth and efficient processing.

**Fig. 4** shows a flow chart of a method 200 for manufacturing one or more sole plates 110a, 110b, according to an embodiment of the present disclosure.

The method 200 comprises: providing 210 a mold; injecting 220 a first material 115c (as best seen in Fig. 3) into the mold; injecting 230 a second material 116c (as best seen in Fig. 3) into the mold. Further, injecting 220 the first material 115c and injecting 230 the second material 116c takes place at least partially at the same time.

As described elsewhere herein, by injecting 220 the first material 115c and injecting 230 the second material 116c at least partially at the same time, the method 200 of manufacturing may be able to be executed quicker, reducing the overall manufacturing time. This may increase productivity, reduce costs, result in a more homogenous mix or a better controlled reaction between the first material 115c and the second material 116c, and improve product quality. In particular, and as described elsewhere in here, by injecting 220 the first material 115c and injecting 230 the second material 116c at least partially at the same time, this allows a seamless transition from one material to the other material (e.g., from the first material 115c to the second material 116c and / or from the second material 116c to the first material 115c). Thereby, a borderless transition between the two different materials 115c, 116c may be achieved. This in turn may provide a sole plate 110a, 110b without any weak points and / or junctions.

Further, potential issues such as premature hardening or degradation of one material 115c, 116c before the other material 115c, 116c may be prevented.

The first material 115c may be different than the second material 116c. For instance, the second material 116c may have a greater stiffness compared to the first material 115c.

Further, as an optional step (as indicated by the dashed box in Fig. 4), the method 200 comprises forming 240 a first sole plate 110a and a second sole plate 110b at the same time. The first sole plate 110a may be a sole plate 110a for a right shoe 100a and the second sole plate 110b may be a sole plate 110b for a left shoe 100b. It is noted that forming 240 a first sole plate 110a and a second sole plate 110b at the same time may ensure consistency between the two sole plates 110a, 110b, as they may be made under substantially the same conditions at the same time. This could contribute to the overall quality and uniformity of the sole plates 110a, 110b, in particular when the two sole plates 110a, 110b are used for a pair of shoes 100a, 100b. Moreover, forming 240 a first sole plate 110a and a second sole plate 110b at the same time may simplify the process flow. This may be the case, because this may eliminate the need to complete one part before starting with another, thus reducing production steps and possible machine downtime. Furthermore, utilization of the production capacity might be better when producing two sole plates 110a, 110b simultaneously, ultimately leading to higher profitability.

Moreover, in the method 200, the first sole plate 110a may comprise: a first portion 115a arranged on a medial side 121a of the first sole plate 110a; and a second portion 116a arranged on a lateral side 120a of the first sole plate 110a. Further, the second sole plate 110b may comprise: a first portion 115b arranged on a lateral side 121b of the second sole plate 110b; and a second portion 116b arranged on a medial side 121b of the second sole plate 110b. Further, injecting 220 the first material 115c may comprise injecting 220 the first material 115c in the first portion 115a of the first sole plate 110a and in the first portion 115b of the second sole plate 110b. Moreover, injecting 230 the second material 116c may comprise injecting 230 the second material 116c in the second portion 116a of the first sole plate 110a and in the second portion 116b of the second sole plate 110b.

Further still, as best seen in Fig. 1 and Fig. 2, the first sole plate 110a and the second sole plate 110b form an asymmetric pair of sole plates 110a, 110b. An asymmetric design is usually not employed due to a more complex manufacturing, leading to a potentially more expensive design. Nevertheless, by way of the proposed method of manufacturing, this disadvantage can be overcome at least partially. Yet, the asymmetric design provides possibilities for fine-tuning and individual customizations that cannot be achieved with symmetrical designs.

As understood, performing the method 200 as described in here leads to the manufacturing of a sole plate 110a, 110b for an article of footwear, in particular for a sports shoe 100a, 100b such as a running shoe.

As described elsewhere herein, a further aspect relates to an apparatus (although not shown in the figures) for manufacturing one or more sole plates 110a, 110b for one or more articles of footwear, in particular for a sports shoe 100a, 100b such as a running shoe, the apparatus comprising means for performing the method 200 according to any one of the embodiments described in here.

As described elsewhere herein, a further aspect relates to an article of footwear (as indicated in Fig. 1), in particular a sports shoe 100a, 100b such as a running shoe, the article of footwear comprising a sole plate 110a, 110b as described in any one of the embodiments in here; and an upper 130a 130b. Further, the sole plate 110a, 110b is attached to the upper 130a, 130b.

As described elsewhere herein, a further aspect relates to pair of shoes 100a, 100b (as indicated in Fig. 1) comprising a right shoe 100a and a left shoe 100b, wherein the right shoe 100a comprises a first sole plate 110a as described in any one of the embodiments in here. Further, the left shoe 100b comprises a second sole plate 110b as described in any one of the embodiments in here.

**Fig. 5** shows a second sole plate 110b for an article of footwear, in particular a sports shoe 100a, 100b, according to an embodiment of the present disclosure. Exemplarily, merely a second sole plate 110b is shown. A first sole plate 110a is not shown in Fig. 5 for brevity only. Features of the embodiment of Fig. 5 not particularly described as being different compared to features of the remaining embodiments of the present disclosure may be similar to the features of the remaining embodiments of the present disclosure. Merely some features are described in Fig. 5 for brevity only.

The sole plate 110b shown in Fig. 5 comprises a first portion comprising a first material 115c (the first material 115c is also indicated in Fig. 3). The sole plate 110b also comprises a second portion comprising a second material 116c (the second material 116c is also indicated in Fig. 3). The second material 116c has a greater stiffness than the first material 115c. In the particular example of Fig. 5, the second sole plate 110b may be a left sole plate 110b for a left shoe 100a. Moreover, as can be gathered from Fig. 5, the sole plate 110b comprises one or more first apertures 125a (in the forefoot part of Fig. 5, on the left-hand side of Fig. 5).

The second material 116c is predominantly provided in a shank portion of the sole plate 110b.

The shank is typically a supportive structure located between the insole (e.g., the inner sole of the shoe) and the outsole (e.g., the bottom of the shoe that makes contact with the ground). The shank is typically a thin, flat piece of material, often made of metal, plastic, or fiberglass, and it runs lengthwise from the heel to the ball of the foot.

The primary purpose of the shank is to provide stability and support to the arch of the foot. The shank may help prevent the shoe from collapsing under the weight of the body and may provide structure to the midfoot portion 112b of the (left) sole plate 110b. Additionally, the shank can offer protection against sharp objects on the ground.

As the shank needs more support, it is beneficial that the sole plate 110b is made stiffer in this area compared to other areas of the sole plate 110b. The reinforcement of the shank, i.e., making the shank stiffer, can be achieved by positioning the injection runner with the second material 116c (stiffer material) for the shank portion of the sole plate 110b and the first material 115c (softer material) for the rest of the sole plate 110b during the injection step.

The shank as shown in Fig. 5 may vary in flexibility and rigidity, depending on the type of shoe and its intended use. For example, a more flexible shank may be desirable to allow for a more natural foot movement. In other cases, an even more rigid shank may be beneficial to provide extra support on uneven terrain.

In various examples, it is possible that the sole plate 110a, 110b for an article of footwear providing for the added benefits described herein can be additionally or alternative used for any devices, components, equipment used in any kind of athletic activities. That is, the sole plate 110a, 110b is not necessarily limited to the example of an article of footwear. It could be feasible that the concept of the sole plate 110a, 110b is transferred to any kind of athletic activity in which a more tailored and / or targeted functionality and support for an athlete needs to be provided.

Nevertheless, it was found that the advantages of the sole plate 110a, 110b described herein are particularly pronounced when applied to an article of footwear, such as a sports shoe 100a, 100b used during an athletic activity, particularly during running and such as during running on an athletics track. This may often be the case during track and field events. Another example is high-jump or any other suitable sports discipline in track and field sport events.

It is noted that the term "athletic activity", "athletic activities" is to be understood such that it includes one or more and / or any combination of at least the following non-exhaustive list: aerobics, athletic exercises, running, hiking, climbing, group fitness classes, walking, cycling, yoga, soccer, tennis, football, basketball, doing a workout, volleyball, gymnastics, weightlifting, cross-training, baseball, softball, rugby, field hockey, wrestling, squash, track and field (such as sprinting, long jump, high jump), cross-country skiing.

In any of the embodiments of sole plate 110a, 110b for an article of footwear, in particular a sports shoe 100a, 100b, as described herein, the first material 115c may comprise one or more of the following materials: polyamide, PA, polyurethane, PU, thermoplastic polyurethane, TPU.

In any of the embodiments of sole plate 110a, 110b for an article of footwear, in particular a sports shoe 100a, 100b, as described herein, the second material 116c may comprise one or more of the following materials: polyamide, PA, in particular fiber -reinforced PA, such as carbon fiber-reinforced PA, wherein the carbon content by weight is at least 1%, preferably at least 2%, more preferably at least 4%, most preferably at least 6%.

It is noted that many material combinations may be possible. This may be dependent on the specific requirements on performance, and / or stiffness, and / or hardness, and / or flexural modulus. Both materials, i.e., the first material 115c (as seen in Fig. 3) and the second material (as seen in Fig 3), may get injected at least partially at the same time. Thereby, both materials may be liquid inside within the mold. In turn, they may melt well into each other, which may have the benefit that they may not suffer from any debonding issues.

In particular, these materials used for the first material 115c and / or the second material 116c have a wide range of characteristics and can be manipulated for many applications due to their varied degrees of hardness, density, flexural modulus, elasticity, cold and heat resistance, durability, and resilience. Moreover, these materials are known for their high wear and abrasion resistance which makes them suitable for the sole plate 110a, 110b as it may require a long lifespan. Polyamide, PA, and in particular fiber-reinforced PA, polyurethane, PU, and thermoplastic polyurethane, TPU, have good resistance to oil, grease, and a variety of chemicals. They also possess good weather and aging resistance. The use of fiber-reinforced polyamide, PA, in particular, where fibers enhance the material's strength and stiffness, can result in better performance and durability of the sole plate 110a, 110b. Moreover, PA, PU, and TPU are thermoplastics and can be easily molded into intricate shapes and designs, enabling the creation of complex and precise components. In addition, as thermoplastics, these materials can often be melted down and reused, contributing to waste reduction and sustainability efforts.

It is noted that any one or more of the embodiments described herein and / or examples may be combined with further aspects as described herein and details of the embodiments and / or examples may also be omitted, as will be understood by the skilled person. The scope of protection is determined by the claims and is not limited by the embodiments and / or examples disclosed in the above figures.

### 6. Further embodiments

The invention is further described by the following embodiments:
1. A sole plate (110a, 110b) for an article of footwear, in particular for a sports shoe (100a, 100b) such as a running shoe, the sole plate (110a, 110b) comprising:
   a first portion (115a, 115b) comprising a first material (115c); and
   a second portion (116a, 116b) comprising a second material (116c); wherein the second material (116c) has a greater stiffness than the first material (115c); and
   wherein, when the sole plate (110a, 110b) is for a right shoe (100a), the first portion (115a) is arranged on a medial side (121a) of the sole plate (110a) and the second portion (116a) is arranged on a lateral side (120a) of the sole plate (110a), and / or
   wherein, when the sole plate (110a, 110b) is for a left shoe (100b), the first portion (115b) is arranged is arranged on a lateral side (120b) of the sole plate (110b) and the second portion (116b) is arranged on a medial side (121b) of the sole plate (110b), wherein the sole plate (110a, 110b) comprises one or more first apertures (125a, 125b).
2. The sole plate (110a, 110b) of the preceding embodiment, wherein the second material (116c) has a stiffness compared to the first material (115c) of at least 1.1, preferably at least 1.2, more preferably at least 1.5, even more preferably at least 2.0, further more preferably at least 3.0, further more preferably at least 4.0, further more preferably at least 5.0, most preferably at least 6.0.
3. The sole plate (110a, 110b) of any one of the preceding embodiments, wherein the second material (116c) has a greater hardness compared to the first material (115c).
4. The sole plate (110a, 110b) of the preceding embodiment, wherein the first material (115c) has a shore D hardness of at most 70 shore D, preferably at most 65 shore D, most preferably at most 60 shore D,
   and / or wherein the second material (116c) has a shore D hardness of at least 65 shore D, preferably at least 70 shore D, most preferably at least 72 shore D.
5. The sole plate (110a, 110b) of any one of the preceding embodiments, wherein the second material (116c) has a greater flexural modulus compared to the first material (115c).
6. The sole plate (110a, 110b) of the preceding embodiment, wherein the first material (115c) has a flexural modulus of at most 1000 MPa, preferably at most 800 MPa, more preferably at most 600 MPa, even more preferably at most 400 MPa, further more preferably at most 300 MPa, most preferably at most 250 MPa,
   and / or wherein the second material (116c) has a flexural modulus of at least 800 MPa, preferably at least 1000 MPa, more preferably at least 1200 MPa, even more preferably at least 1300 MPa, further more preferably at least 1400 MPa, most preferably at least 1500 MPa.
7. The sole plate (110a, 110b) of any one of the preceding embodiments, wherein the one or more first apertures (125a, 125b) have an elongated shape, preferably a shape of one of a slit, a groove, a cut, and a vent.
8. The sole plate (110a, 110b) of any one of the preceding embodiments, wherein the one or more first apertures (125a, 125b) define through holes.
9. The sole plate (110a, 110b) of any one of the preceding embodiments, wherein the one or more first apertures (125a, 125b) extend in a longitudinal direction of the sole plate (110a, 110b) and in a transverse direction of the sole plate (noa, mob),
   wherein the extension in the longitudinal direction is preferably larger compared to the extension in the transverse direction.
10. The sole plate (110a, 110b) of any one of the preceding embodiments, wherein the one or more first apertures (125a, 125b) are arranged in the first portion (115a, 115b) of the sole plate (110a, 110b).
11. The sole plate (110a, 110b) of any one of the preceding embodiments, wherein the sole plate (110a, 110b) comprises one or more second apertures (126a, 126b) arranged in the second portion (116a, 116b) of the sole plate (110a, 110b).
12. The sole plate (110a, 110b) of any one of the preceding embodiments, wherein the number of the one or more first apertures (125a, 125b) is greater than the number of the one or more second apertures (126a, 126b).
13. The sole plate (110a, 110b) of any one of the preceding embodiments, wherein one or more spikes (127) are arranged on the sole plate (110a, 110b), preferably on a forefoot portion (111a, 111b) of the sole plate (110a, 110b),
   wherein the sole plate (110a, 110b) optionally comprises one or more receptacles (127'), wherein the one or more receptacles (127') are arranged on the sole plate (110a, 110b), preferably on a forefoot portion (111a, 111b) of the sole plate (110a, 110b), wherein the one or more receptacles (127') are configured to receive the one or more spikes (127).
14. The sole plate (110a, 110b) of any one of the preceding embodiments, if dependent on embodiment 11, wherein the one or more first apertures (125a, 125b) and / or the one or more second apertures (126a, 126b) have a length (L), preferably in a longitudinal direction of the sole plate (110a, 110b), of at least 1 cm, preferably at least 2 cm, more preferably at least 4 cm, even more preferably at least 6 cm, further more preferably at least 7 cm, further more preferably at least 8 cm, further more preferably at least 10 cm, further more preferably at least 12 cm, further more preferably at least 14 cm, most preferably of at least 15 cm,
   and / or wherein the one or more first apertures (125a, 125b) and / or the one or more second apertures (126a, 126b) have a length (L), preferably in a longitudinal direction of the sole plate (110a, 110b), of at most 25 cm, preferably at most 23 cm, more preferably at most 20 cm, even more preferably at most 18 cm, further more preferably at most 16 cm, most preferably of at most 15 cm.
15. The sole plate (110a, 110b) of any one of the preceding embodiments, wherein the sole plate (110a, 110b) has a maximum thickness of at most 10 mm, preferably at most 8 mm, more preferably at most 6 mm, even more preferably at most 5 mm, even more preferably at most 4 mm, most preferably at most 3 mm.
16. The sole plate (110a, 110b) of any one of the preceding embodiments, wherein the sole plate (110a, 110b) is an integrally formed piece extending from a heel region of the sole plate (110a, 110b) to a toe region of the sole plate (110a, 110b).
17. A method (200) for manufacturing one or more sole plates (110a, 110b) for one or more articles of footwear, in particular for a sports shoe (100a, 100b) such as a running shoe, the method (200) comprising:
   Providing (210) a mold;
   injecting (220) a first material (115c) into the mold;
   injecting (230) a second material (116c) into the mold;
   wherein injecting (220) the first material (115c) and injecting (230) the second material (116c) takes place at least partially at the same time.
18. The method (200) of the preceding embodiment 17, wherein the first material (115c) is different than the second material (116c).
19. The method (200) of embodiment 17 or 18, wherein the second material (116c) has a greater stiffness compared to the first material (115c).
20. The method (200) of any one of the preceding embodiments 17 to 19, wherein the method (200) comprises forming (240) a first sole plate (110a) and a second sole plate (110b) at the same time.
21. The method (200) of the preceding embodiment 20, wherein the first sole plate (110a) is a sole plate (110a) for a right shoe (100a) and the second sole plate (110b) is a sole plate (110b) for a left shoe (100b).
22. The method (200) of embodiment 20 or 21, wherein the first sole plate (110a) comprises:
   a first portion (115a, 115b) arranged on a medial side (121a, 121b) of the first sole plate (110a); and
   a second portion (116a, 116b) arranged on a lateral side (120a, 120b) of the first sole plate (110a);
   wherein the second sole plate (110b) comprises:
      a first portion (115a, 115b) arranged on a lateral side (120a, 120b) of the second sole plate (110b); and
      a second portion (116a, 116b) arranged on a medial side (121a, 121b) of the second sole plate (110b);
      wherein injecting (220) the first material (115c) comprises injecting (220) the first material (115c) in the first portion (115a) of the first sole plate (110a) and
      in the first portion (115b) of the second sole plate (110b), and wherein injecting (230) the second material (116c) comprises injecting (230) the second material (116c) in the second portion (116a) of the first sole plate (110a) and in the second portion (116b) of the second sole plate (110b).
23. The method (200) of any one of the preceding embodiments 20 to 22, wherein the first sole plate and the second sole plate form an asymmetric pair of sole plates (110a, 110b).
24. The method (200) of any one of the preceding embodiments 17 to 23, wherein injecting (230) the second material (116c) comprises using more injection nozzles (143) compared to injecting (220) the first material (115c).
25. A sole plate (110a, 110b) for an article of footwear, in particular for a sports shoe (100a, 100b) such as a running shoe, the sole plate (110a, 110b) being manufactured according to the method (200) of any one of the preceding embodiments 17 to 24.
26. An apparatus for manufacturing one or more sole plates (110a, 110b) for one or more articles of footwear, in particular for a sports shoe (100a, 100b) such as a running shoe, the apparatus comprising means for performing a method (200) according to any one of the preceding embodiments 17 to 24.
27. The sole plate (110a, 110b) and / or the method (200) of any one of the preceding embodiments, wherein the first material (115c) comprises one or more of the following: polyamide, PA, polyurethane, PU, thermoplastic polyurethane, TPU,
   and / or wherein the second material (116c) comprises one or more of the following: polyamide, PA, in particular fiber -reinforced PA, such as carbon fiber-reinforced PA, wherein the carbon content by weight is at least 1%, preferably at least 2%, more preferably at least 4%, most preferably at least 6%.
28. An article of footwear, in particular a sports shoe (100a, 100b) such as a running shoe, the article of footwear comprising:
   a sole plate (110a, 110b) according to any one of the preceding embodiment 1 to 16;
   an upper (130a, 130b);
   wherein the sole plate (110a, 110b) is attached to the upper (130a, 130b).
29. The article of footwear of the preceding embodiment, wherein the article of footwear is a running shoe (100a, 100b), in particular used for track and field running.
30. A pair of shoes (100a, 100b) comprising a right shoe (100a) and a left shoe (100b),
   wherein the right shoe (100a) comprises a first sole plate (110a) according to any one of the preceding embodiments 1 to 16; and wherein the left shoe (100b) comprises a second sole (110b) plate according to any one of the preceding embodiments 1 to 16.

### 7. List of reference signs used

- 100a: (right) shoe, in particular sports shoe
- 100b: (left) shoe, in particular sports shoe
- 110a: (right) (first) sole plate
- 110b: (left) (second) sole plate
- 111a: forefoot portion of the (right) sole plate
- 111b: forefoot portion of the (left) sole plate
- 112a: midfoot portion of the (right) sole plate
- 112b: midfoot portion of the (left) sole plate
- 113a: rearfoot portion of the (right) sole plate
- 113b: rearfoot portion of the (left) sole plate
- 115a: first portion of the (right) sole plate
- 115b: first portion of the (left) sole plate
- 115c: first material
- 116a: second portion of the (right) sole plate
- 116b: second portion of the (left) sole plate
- 116c: second material
- 120a: lateral side of the (right) sole plate
- 120b: lateral side of the (left) sole plate
- 121a: medial side of the (right) sole plate
- 121b: medial side of the (left) sole plate
- 125a: one or more first apertures of the (right) sole plate
- 125b: one or more first apertures of the (left) sole plate
- 125b': one or more first apertures of the (left) sole plate
- 125b": one or more first apertures of the (left) sole plate
- 126a: one or more second apertures of the (right) sole plate
- 126b: one or more second apertures of the (right) sole plate
- 127: one or more spikes
- 127': one or more receptacles for one or more spikes
- 128: heel to toe midline of the sole plate
- 130a: upper (right shoe)
- 130b: upper (left shoe)
- 140: feed line for a first material
- 141: feed line for a second material
- 142: one or more injection nozzles for a first material
- 143: one or more injection nozzles for a second material
- 200: method for manufacturing one or more sole plates
- 210: providing a mold
- 220: injecting a first material
- 230: injecting a second material
- 240: forming a first sole plate and a second sole plate at the same time
- L: length of the one or more first apertures and / or the one or more second apertures
- HT: heel to toe axis (longitudinal direction of the outsole)
- ML: medial to lateral axis

## Claims

1. A sole plate (110a, 110b) for an article of footwear, in particular for a sports shoe (100a, 100b) such as a running shoe, the sole plate (110a, 110b) comprising:
a first portion (115a, 115b) comprising a first material (115c); and
a second portion (116a, 116b) comprising a second material (116c);
wherein the second material (116c) has a greater stiffness than the first material (115c); and
wherein, when the sole plate (110a, 110b) is for a right shoe (100a), the first portion (115a) is arranged on a medial side (121a) of the sole plate (110a) and the second portion (116a) is arranged on a lateral side (120a) of the sole plate (110a), and / or
wherein, when the sole plate (110a, 110b) is for a left shoe (100b), the first portion (115b) is arranged is arranged on a lateral side (120b) of the sole plate (110b) and the second portion (116b) is arranged on a medial side (121b) of the sole plate (110b),
wherein the sole plate (110a, 110b) comprises one or more first apertures (125a, 125b).

2. The sole plate (110a, 110b) of the preceding claim, wherein the second material (116c) has a stiffness compared to the first material (115c) of at least 1.1, preferably at least 1.2, more preferably at least 1.5, even more preferably at least 2.0, furthermore preferably at least 3.0, further more preferably at least 4.0, further more preferably at least 5.0, most preferably at least 6.0,
optionally, wherein the second material (116c) has a greater hardness compared to the first material (115c).

3. The sole plate (110a, 110b) of the preceding claim, wherein the first material (115c) has a shore D hardness of at most 70 shore D, preferably at most 65 shore D, most preferably at most 60 shore D,
and / or wherein the second material (116c) has a shore D hardness of at least 65 shore D, preferably at least 70 shore D, most preferably at least 72 shore D, optionally, wherein the second material (116c) has a greater flexural modulus compared to the first material (115c).

4. The sole plate (110a, 110b) of any one of the preceding claims, wherein the one or more first apertures (125a, 125b) have an elongated shape, preferably a shape of one of a slit, a groove, a cut, and a vent.

5. The sole plate (110a, 110b) of any one of the preceding claims, wherein the one or more first apertures (125a, 125b) define through holes.

6. The sole plate (110a, 110b) of any one of the preceding claims, wherein the one or more first apertures (125a, 125b) extend in a longitudinal direction of the sole plate (110a, 110b) and in a transverse direction of the sole plate (110a, 110b),
wherein the extension in the longitudinal direction is preferably larger compared to the extension in the transverse direction,
optionally, wherein the one or more first apertures (125a, 125b) are arranged in the first portion (115a, 115b) of the sole plate (110a, 110b).

7. The sole plate (110a, 110b) of any one of the preceding claims, wherein the sole plate (110a, 110b) comprises one or more second apertures (126a, 126b) arranged in the second portion (116a, 116b) of the sole plate (110a, 110b).

8. The sole plate (110a, 110b) of any one of the preceding claims, wherein the number of the one or more first apertures (125a, 125b) is greater than the number of the one or more second apertures (126a, 126b),
optionally, wherein the sole plate (110a, 110b) is an integrally formed piece extending from a heel region of the sole plate (110a, 110b) to a toe region of the sole plate (110a, 110b).

9. A method (200) for manufacturing one or more sole plates (110a, 110b) for one or more articles of footwear, in particular for a sports shoe (100a, 100b) such as a running shoe, the method (200) comprising:
Providing (210) a mold;
injecting (220) a first material (115c) into the mold;
injecting (230) a second material (116c) into the mold;
wherein injecting (220) the first material (115c) and injecting (230) the second material (116c) takes place at least partially at the same time.

10. The method (200) of the preceding claim 9, wherein the first material (115c) is different than the second material (116c).

11. The method (200) of claim 9 or 10, wherein the method (200) comprises forming (240) a first sole plate (110a) and a second sole plate (110b) at the same time.

12. A sole plate (110a, 110b) for an article of footwear, in particular for a sports shoe (100a, 100b) such as a running shoe, the sole plate (110a, 110b) being manufactured according to the method (200) of any one of the preceding claims 9 to 11.

13. An apparatus for manufacturing one or more sole plates (110a, 110b) for one or more articles of footwear, in particular for a sports shoe (100a, 100b) such as a running shoe, the apparatus comprising means for performing a method (200) according to any one of the preceding claims 9 to 11.

14. An article of footwear, in particular a sports shoe (100a, 100b) such as a running shoe, the article of footwear comprising:
a sole plate (110a, 110b) according to any one of the preceding claims 1 to 8;
an upper (130a, 130b);
wherein the sole plate (110a, 110b) is attached to the upper (130a, 130b).

15. A pair of shoes (100a, 100b) comprising a right shoe (100a) and a left shoe (100b),
wherein the right shoe (100a) comprises a first sole plate (110a) according to any one of the preceding claims 1 to 8; and
wherein the left shoe (100b) comprises a second sole (110b) plate according to any one of the preceding claims 1 to 8.
